# EUROPÄISCHE PATENTANMELDUNG

(11) **EP 1 426 097 A1**
(43) Veröffentlichungstag der Anmeldung: **09.06.2004**
(21) Anmeldenummer: 03027912.9
(22) Anmeldetag: 04.12.2003
(51) Int. Cl.: B01D 61/08, B01D 61/12, B01D 61/18, B01D 61/22, C02F 1/44, C02F 1/00

(54) **Vorrichtung und Verfahren zur Abtrennung eines Lösungsmittels aus einer Lösung**

(30) Priorität: 04.12.2002 AT 18102002
(71) Anmelder: Mediscan GmbH & Co. KG, 4550 Kremsmünster (AT)
(72) Erfinder: Greiner, Axel, Dr., 4600 Wels (AT)
(74) Vertreter: Secklehner, Günter

(57) **Zusammenfassung**

Die Erfindung betrifft eine Vorrichtung (1) zur zumindest teilweisen Abtrennung eines Lösungsmittels (2) aus einer Lösung (3), mit einem tragbaren Behälter (5) in dem zumindest eine Membranfiltereinrichtung (6), insbesondere zumindest eine Umkehrosmose-Einheit, sowie eine Filtereinrichtung (7) und vorzugsweise eine Fördereinrichtung (8) zum Aufbau eines Druckes, z.B. eine Pumpe, angeordnet sind, wobei die Membranfiltereinrichtung (6) einen Eingang (19) für die Lösung (3), einen Lösungsmittelausgang (18) und einen Konzentratausgang (16) für ein aus der Lösung (3) entstandenes Konzentrat (4) aufweist und wobei die Filtereinrichtung (7) mit dem Lösungsmittelausgang (18) und die vorzugsweise Fördereinrichtung (8) mit dem Eingang (19) strömungsverbunden ist bzw. sind. Im Behälter (5) ist zwischen der Membranfiltereinrichtung (6) und der Filtereinrichtung (7) und/oder in Strömungsrichtung des Lösungsmittels (2) durch ein Leitungssystem im Behälter (5) nach der Filtereinrichtung (7) zumindest eine Messeinrichtung (20) mit diesen bzw. dieser strömungsverbunden angeordnet. Die Messeinrichtung (20) ist mit einer Anzeige- und/oder Steuereinrichtung (21, 22) leitungsverbunden.

## Beschreibung

Die Erfindung betrifft eine Vorrichtung zur Abtrennung eines Lösungsmittels aus einer Lösung, mit einem tragbaren Behälter in dem zumindest eine Membranfiltereinrichtung sowie eine Filtereinrichtung angeordnet sind, wobei die Membranfiltereinrichtung einen Eingang für die Lösung, einen Lösungsmittelausgang und einen Konzentratausgang für ein aus der Lösung entstandenes Konzentrat aufweist und wobei die Filtereinrichtung mit dem Lösungsmittelausgang strömungsverbunden ist, ein Verfahren zur Abtrennung eines Lösungsmittels aus einer Lösung, bei dem das Lösungsmittel der Lösung durch Permeation, durch eine semipermeable Membran der Lösung entzogen und einer anschließenden Endreinigung unterzogen wird sowie die Verwendung der Vorrichtung zur Trinkwassererzeugung.

Die ausreichende Versorgung der Menschheit mit Trinkwasser stellt ein immer größer werdendes Problem dar, insbesondere in der südlichen Hemisphäre. Wasser ist zwar prinzipiell in ausreichenden Mengen vorhanden, jedoch ist der Großteil davon für den direkten Verzehr aufgrund des Salzgehaltes von Meerwasser nicht geeignet.

Um aus Meerwasser Trinkwasser zu erzeugen, sind bereits verschiedenste Techniken, wie die Umkehrosmose, bekannt. Letztere gehört zu den durch einen hydrostatischen Druck betriebenen Membran-Trennverfahren. Dabei wird der aus der Osmose bekannte Effekt des "Verdünnungsbestrebens" der konzentrierten Lösung, d.h. dass zum Konzentrationsausgleich zwischen zwei Lösungen unterschiedlicher Konzentration, welche über eine semipermeable Trennwand, nämlich die Membran, miteinander in Verbindung stehen, das Lösungsmittel von der verdünnteren Lösung in die konzentriertere Lösung diffundiert, wodurch allmählich ein hydrostatischer Überdruck, der sogenannte osmotische Druck, der dem Verdünnungsbestreben entgegenwirkt, erzeugt wird, ausgenutzt. Durch die Verwendung einer semipermeablen Trennwand wird nur Teilen des System die Diffusion ermöglicht, wodurch gelösten Stoffen, wie z.B. Salzen, der Durchtritt verwehrt ist. Bei der Umkehrosmose wird nun ein hydrostatischer Druck angelegt, der größer ist als der osmotische Druck, womit erreicht, dass aus Salzlösungen das Lösungsmittel in Richtung höherer Verdünnung diffundiert und somit die Salzlösungen aufkonzentriert werden.

Umkehrosmoseanlagen der Trinkwasseraufbereitung sind weitverbreitet und weisen unterschiedlichste Anlagengrößen, beginnend von stationären Anlagen, auf. So ist z.B. aus der US 5,997,737 A eine Trinkwasseraufbereitungsanlage aus Meerwasser für Bohrinseln bekannt. Diese besteht aus einer Pumpe, die Meerwasser über einen Meerwasserfilter zu einer Mehrzahl von Tanks mit Umkehrosmoseelementen zuführt. Ein Teil des darin gereinigten Wassers wird in einer zweiten Umkehrosmoseeinheit weiter gereinigt und werden in der Folge die beiden Teilströme an gereinigtem Wasser wieder vereinigt, wodurch Trinkwasserqualität entsteht. Durch die Aufteilung auf zwei Umkehrosmoseeinheiten ist ein größerer Mengendurchsatz möglich, da im zweiten nur mehr eine Endreinigung erfolgen muss. Durch Bestrahlung mittels UV-Licht wird das Trinkwasser länger haltbar und kann dieses in Tanks gelagert werden.

Eine ähnliche Anlage ist aus der US 5,632,892 A bekannt, wobei hier der hydrostatische Druck durch eine von einem Dieselmotor angetriebenen Hochdruckpumpe erzeugt wird. Das Rohwasser wird bei dieser Anlage zweistufig über einen Primärfilter, z.B. einen Sandfilter, für die Grobreinigung, und einen Sekundärfilter vorgereinigt, bevor es über die Hochdruckpumpe in die Umkehrosmoseeinheit eingeleitet wird.

Die US 5,972,216 A beschreibt eine Trinkwasseraufbereitungsanlage in Modulbauweise, speziell ausgelegt für militärische Operationen. Die Module können seriell oder parallel geschaltet werden, sodass ständig ausreichend Trinkwasser bzw. auch Wasser minderer Qualität für Duschen zur Verfügung steht. Die Module sind in ihren Abmessungen so bemessen, dass je ein komplettes Modul auf einem LKW-Anhänger Platz findet.

Der Stand der Technik beschreibt auch eine Reihe von Klein- und Kleinstanlagen für die Trinkwasseraufbereitung, die nach diesem Prinzip arbeiten.

So ist aus der US 6,120,682 A eine fahrbare Trinkwasseraufbereitungsanlage bekannt, welche an eine Stadtwasserleitung anschließbar ist. Neben der Umkehrosmoseeinheit sowie einer Pumpe zum Aufbau des erforderlichen Druckes umfasst diese auch einen Tank zur Lagerung des gereinigten Wassers. Über einen Druckschalter wird, sollte der an der Anlage durch den Anschluss an die Trinkwasserleitung anstehende Druck außerhalb eines Bereichs für den Betriebsdruck liegen, die Anlage abgeschaltet, um damit eine Beschädigung der Umkehrosmoseeinheit zu vermeiden.

Aus der GB 2 194 524 A ist eine Trinkwasseraufbereitungsanlage für den Heimgebrauch bekannt. Diese umfasst einen Vorratsbehälter mit einem Partikelfilter, eine Umkehrosmoseeinheit und einen an diese ausgangsseitig strömungsverbunden Aktivkohlefilter. Die Anlage ist in einem Behälter untergebracht.

Aus der US 4,759,844 A ist eine ähnliche Anlage bekannt, wobei zusätzlich noch ein Ionentauscher für die Deionisation des Wasser angeordnet ist.

Bei den beiden zuletzt genannten Anlagen soll mit Hilfe des Aktivkohlefilters eine zusätzliche Filtration von im Wasser suspendierten Partikeln erfolgen und andererseits sollen dabei Geruchsstoffe adsorbiert werden.

Eine Weiterentwicklung dieses Aktivkohlefilters beschreibt die US 5,198,114 A, nach der die Aktivkohle mit Dolomit versetzt ist. Damit soll zum einen durch das bevorzugte Wachstum von harmlosen Bakterien das Wachstum von gesundheitsgefährdenden Bakterien verhindert werden und zum anderen erfolgt eine Mineralisation des Wasser mit Calcium- und Magnesiumionen.

Die Mineralisation ist auch aus der US 5,597,487 A bekannt. Diese für Leitungswasser ausgelegte Trinkwasseranlage besteht aus einem Partikelvorfilter, einem Druckregler für den Eingangsdruck und einer Pumpe zum Aufbau des erforderlichen hydrostatischen Drucks für die Umkehrosmoseeinheit. Alternativ können Nano- bzw. Ultrafiltration verwendet werden. Um die Effizienz der Umkehrosmoseeinheit zu steigern, wird das Rohwasser aus der Leitung mit bereits gereinigtem Wasser verdünnt, wodurch die Flussrate durch die Osmoseeinheit erhöht wird. Für die Mineralisation des gereinigten Wassers werden Calciumchlorid und Magnesiumchlorid zugesetzt. Auch dieses System umfasst einen Aktivkohlefilter, einerseits um eine ausreichende Durchmischung mit den Mineralstoffen und andererseits gelöstes CO₂ aus dem Wasser zu entfernen. Die Sterilisation mittels UV-Licht ist ebenfalls vorgesehen.

Nach der DE 196 34 028 A kann eine Umkehrosmoseentsalzungsanlage in einem Handkoffer angeordnet sein.

Neben Anlagen mit elektrisch bzw. durch Verbrennungsmotoren angetriebene Pumpen sind z.B. aus der US 5,496,466 A eine Anlage mit einer Handpumpe und aus der US 3,850,815 A eine Anlage, bei der der erforderliche hydrostatische Druck mittels CO₂-Katuschen aufgebaut wird, bekannt.

Schließlich ist noch die Verwendung von Umkehrosmoseeinheiten für Wasserkocher bzw. Kaffeemaschinen aus der US 6,003,569 A sowie zur Erzeugung einer intravenös zu verabreichenden Lösung zur Behandlung eines Patienten außerhalb eines Krankenhauses aus der US 5,259,954 A bekannt.

Nachteilig bei Trinkwasseraufbereitungsanlagen, die nach dem Umkehrosmoseprinzip arbeiten, ist das sogenannte Membran-Fouling, d.h. die mehr oder weniger rasche Verlegung der Membranoberfläche. Um trotzdem einen Betrieb der Anlage über einen hinreichend langen Zeitraum zu ermöglichen, weisen großtechnische Anlagen Membranflächen von über 100 m² auf. Dies ist naturgemäß bei Klein- und Kleinstanlagen, insbesondere bei tragbaren Anlagen, nicht möglich.

Aufgabe der Erfindung ist es, die Betriebssicherheit einer eingangs genannten Vorrichtung in anlagentechnischer bzw. handhabungstechnischer Hinsicht zu verbessern.

Diese Aufgabe der Erfindung wird durch eine eingangs genannte Vorrichtung gelöst, bei der in dem Behälter zwischen der Membranfiltereinrichtung und der Filtereinrichtung und/oder in Strömungsrichtung des Lösungsmittels durch ein Leitungssystem im Behälter nach der Filtereinrichtung zumindest eine Messeinrichtung mit diesen bzw. dieser strömungsverbunden angeordnet ist, und die Messeinrichtung mit einer Anzeige- und/oder Steuereinrichtung leitungsverbunden ist sowie eigenständig durch ein eingangs genanntes Verfahren, bei der eine Permeationsgeschwindigkeit überwacht und das Verfahren bei einer Abnahme der Permeationsgeschwindigkeit unterbrochen oder die Membran mit reinem Lösungsmittel gespült wird. Vorteilhaft ist dabei, dass einerseits dem Anwender Kontrollaufgaben, die ansonsten regelmäßig durchzuführen sind, durch die Vorrichtung selbst abgenommen werden und andererseits dass die Vorrichtung selbst vor einer eventuellen Beschädigung aufgrund einer Betriebsstörung geschützt werden kann. So ist es insbesondere möglich, einen zu hohen Druck in der Anlage, wodurch unter Umständen die Membran der Membranfiltereinrichtung zerstört werden könnte zu vermeiden. Damit kann die Vorrichtung von unerfahrenen Personen betrieben werden, wodurch die Verwendung derselben in Entwicklungsländern möglich wird. Weiters kann damit die Vorrichtung im Hinblick auf eine möglichst hohe Ausbeute an Lösungsmittel optimiert werden.

Weiterbildungen der Vorrichtung sind in den abhängigen Ansprüchen angegeben.

So kann die Messeinrichtung als Druck-, Leitfähiges- oder Durchflussmengenmesszelle ausgebildet sein. Damit wird ein variabler Aufbau der Vorrichtung, insbesondere im Hinblick auf unterschiedliche Lösungen mit unterschiedlichen Lösungsmitteln erreicht, wodurch eine weitere Feinabstimmung der Vorrichtung ermöglicht wird. Z.B. können durch die entsprechende Auswahl der Messeinrichtung Viskositätsprobleme der Lösung mitberücksichtigt werden, wobei trotzdem ein hinreichend genauer Messwert erhalten wird. Selbstverständlich können auch mehrere dieser Messeinrichtung parallel oder in Serie in der Vorrichtung angeordnet sein, um damit ein zusätzliches Sicherheitssystem für den eventuellen Ausfall einer Messeinrichtung zu schaffen.

Von Vorteil ist dabei, wenn die Messeinrichtung mit einem Mikroprozessor leitungsverbunden ist, wodurch ein höherer Automatisierungsgrad sowie gegebenenfalls eine Regelfunktion, sollte in der Vorrichtung eine Regelvorrichtung angeordnet sein, ermöglicht wird.

Der Mikroprozessor kann zur Spracherkennung und/oder ―ausgabe ausgebildet sein, wodurch die Handhabung oder Vorrichtung weiter vereinfacht wird.

Weiters kann die Messeinrichtung und/oder die Steuereinrichtung und/oder der Mikroprozessor einen Zeitgeber aufweisen, wodurch ein automatischer, periodischer Ablauf von Vorgängen, z.B. der Reinigung der Membranfiltereinrichtung, ermöglicht wird und dem Verwender damit ein beinahe autarkes System zur Verfügung gestellt werden kann.

Von Vorteil ist dabei, wenn die Messeinrichtung und/oder die Anzeige- und/oder die Steuereinrichtung und/oder der Mikroprozessor einen einzigen Bauteil bilden, wodurch die Vorrichtung kompakter gestaltet werden kann.

Nach Weiterbildungen ist vorgesehen, dass die Steuereinrichtung mit zumindest einer Einrichtung zur Unterbrechung bzw. Änderung der Strömungsrichtung der Lösung bzw. des Lösungsmittel im Leitungssystem des Behälters, z.B. einem Zwei- oder Dreiwegeventil, leitungsverbunden ist, bzw. diese Einrichtung(en) im Leitungssystem des Behälters derart angeordnet ist bzw. sind, dass das Lösungsmittel die Membranfiltereinrichtung und/oder die Filtereinrichtung in umgekehrter Strömungsrichtung durchströmt, wodurch eine Reinigung der Membranfiltereinrichtung bzw. Filtereinrichtung ermöglicht wird und damit die Vorrichtung über einen längeren Zeitraum ohne Austausch der Membranfiltereinrichtung bzw. der Filtereinrichtung betrieben werden kann.

Es kann auch vorgesehen sein, dass im Behälter eine Strömungsverbindung zwischen einer an den Lösungsmittelausgang und einer an dem Lösungseingang der Membranfiltereinrichtung angeschlossenen Leitung angeordnet ist, wodurch erforderlichenfalls die Lösung ständig verdünnt wird und damit in der Membranfiltereinrichtung eine höhere Permeationsgeschwindigkeit ermöglicht und das Zuwachsen der Membran mit in der Lösung gelösten Substanzen zumindest über einen längeren Zeitraum vermindert werden kann.

Der Behälter kann als Handkoffer bzw. nach einer weiteren Ausgestaltung fahrbar ausgebildet sein, wodurch die Mobilität der Vorrichtung erhöht werden kann und damit auch für Reisen in Regionen ohne ausreichende Trinkwasserversorgung jederzeit zur Verfügung steht.

Dabei kann der Behälter zumindest teilweise aus einem Metall, insbesondere Aluminium, und/oder einem vorzugsweise durchsichtigen Kunststoff, vorzugsweise einem Duroplast, gebildet sein, sodass die Vorrichtungsbestandteile vor äußeren Einflüssen geschützt sind, beispielsweise vor korrosiven Medien, wie z.B. dem Salzgehalt der Luft in Küstenregionen und wodurch auch ein Einblick in das Innere des Handkoffer möglich ist, wodurch gegebenenfalls Störungen beim Betrieb der Anlage sofort erkannt werden können, ohne dass der Behälter geöffnet werden muss.

Von Vorteil kann auch sein, dass nach dem Konzentratausgang, und mit diesem strömungsverbunden, ein Konzentratfilter und/oder zumindest einen Ionentauscher angeordnet ist, sodass das Konzentrat jederzeit entsorgt werden kann und nicht als Sondermüll behandelt werden muss, was insbesondere in Hinblick auf die Verwendung der Vorrichtung während längerer Reisen von Bedeutung ist.

Vor der Membranfiltereinrichtung bzw. vor der Fördereinrichtung, jeweils in Strömungsrichtung der Lösung gesehen, kann zumindest ein mechanisches Vorfilter, z.B. ein Sieb für Partikel in der Lösung, angeordnet sein. Dieses Vorfilter kann eine Maschenweite im Bereich von 5 mm bis 5 mesh, insbesondere 2 mm bis 10 mesh, aufweisen. Vorzugsweise wird eine mehrstufige Filtrierung der Lösung mit einem Vorfilter mit 400 mesh und einem in Strömungsrichtung der Lösung daran anschließenden weiteren Vorfilter mit 10 mesh vorgesehen. Damit kann einerseits die Membranfiltereinrichtung und andererseits die Fördereinrichtung vor einer mechanischen Zerstörung durch Partikel geschützt werden und kann zudem ein vorzeitiges Zuwachsen der Membran in der Membranfiltereinrichtung vermieden werden.

Weiters kann in einer Saugleitung für die Lösung außerhalb des Behälters, die mit dem Vorfilter oder der Fördereinrichtung oder der Membranfiltereinrichtung strömungsverbunden ist, ein Partikelfilter mit einer Maschenweite im Bereich zwischen 2 mm und 10 mm, vorzugsweise 2 mm, angeordnet sein, sodass bereits während der Ansaugung der Lösung eine Grobabscheidung von Partikeln erfolgt.

Von Vorteil ist dabei, wenn dabei die Saugleitung als schwimmende Entnahme mit einem Schwimmkörper ausgebildet ist, sodass die Entnahme der Lösung z.B. von Wasser aus dem Meer bzw. aus einem See oder Fluss im Oberflächenbereich stattfindet und damit Partikel, wie z.B. Sand, bzw. Sedimente nicht angesaugt werden.

Im Leitungssystem des Behälters kann eine Messzelle zur Bestimmung eines pH-Wertes und/oder zur Bestimmung eines TDS-Wertes der Lösung angeordnet sein. Dadurch wird es möglich, dass bei einer Überschreitung eines vordefinierbaren Wertes für den pH-Wert oder den TDS-Wert die Lösung mit zusätzlichem Lösungsmittel verdünnt wird und kann damit die Vorrichtung über ein längere Zeitspanne wartungslos betrieben werden.

Im Strömungsverlauf der Lösung kann vor der Membranfiltereinrichtung eine Einrichtung zur Zugabe eines Inhibitors angeordnet sein, wobei nach einer weiteren Ausführungsvariante diese Einrichtung mit dem Vorfilter kombiniert sein kann. Auch dadurch wird es wiederum möglich, die Vorrichtung über einen längeren Zeitraum störungsfrei und wartungsfrei zu betreiben, insbesondere mit korrosiven Medien, wie z.B. Meerwasser.

Von Vorteil ist, wenn die Filtereinrichtung als Kohlefilter, der mit Marmor oder Dolomit versetzt ist, ausgebildet ist, da damit eine weitere Aufreinigung des Lösungsmittels möglich ist und durch den Zusatz von Marmor oder Dolomit neben einer Mineralisation des Lösungsmittel auch ein Schutz von ungewolltem Bakterienwachstum möglich ist.

Es kann auch vorgesehen sein, dass nach der Membranfiltereinrichtung eine Sterilisationseinrichtung angeordnet ist, sodass das Lösungsmittel, insbesondere das gereinigte Wasser, über einen längeren Zeitraum haltbar wird. Insbesondere ist die Anordnung dieser Einrichtung von Vorteil, wenn das Lösungsmittel nicht sofort verbraucht, sondern in einem Tank über einen längeren Zeitraum vorrätig gehalten wird.

Eine längere Lagerung bei gleichbleibender Qualität des Lösungsmittels kann auch dadurch erreicht werden, dass nach der Membranfiltereinrichtung eine Kühleinrichtung bzw., wie dies in einer weiteren Ausbildung vorgesehen ist, diese in einem Tank für das Lösungsmittel angeordnet ist. Im Falle der Verwendung der Vorrichtung zur Trinkwassererzeugung, kann damit aber auch das subjektive Geschmacksempfinden verbessert werden.

Durch die Anordnung einer Einrichtung zur Zugabe von Mineralstoffen und/oder Vitaminen nach der Membranfiltereinrichtung oder nach der Filtereinrichtung, ist ebenfalls eine Qualitätssteigerung eines gereinigten Wassers möglich und kann dieses Wasser zudem diätetische Eigenschaften aufweisen.

Dabei ist von Vorteil, wenn in dieser Einrichtung zur Zugabe von Mineralstoffen und/oder Vitaminen ein Rührer angeordnet ist, wodurch sich die Homogenisierung dieser Zusatzstoffe im Wasser erleichtern lässt.

Die Verkaufbarkeit des mit der Vorrichtung hergestellten, gereinigten Trinkwassers lässt sich auch dadurch erhöhen, dass sich nach der Membranfiltereinrichtung eine Einrichtung zur Zugabe von CO₂ angeordnet ist, die insbesondere mit der Einrichtung zur Zugabe von Mineralstoffen und/oder Vitaminen kombiniert ist.

Wartungsarbeitung lassen sich dadurch erleichtern, indem die Leitungen für die Lösung, das Lösungsmittel und das Konzentrat unterschiedlich markiert sind, da damit die Verfolgbarkeit der Strömungsrichtung für den Wartungstechniker aber auch für den Laien einfacher ist. Zudem lässt sich erreichen, dass wenn diese unterschiedlichen Markierungen bis einschließlich der Anschlüsse am Behälter für diverse Leitungen weitergeführt wird, dass die Vertauschbarkeit für den Verwender verringert und damit eine fehlerfreie Funktion der Vorrichtung ermöglicht werden kann.

Zur Stromgewinnung und damit zur Energieversorgung der Vorrichtung bzw. einzelner Bauteile davon, kann zumindest eine Solarzelle angeordnet, z.B. ein Behälterteil durch diese gebildet sein, sodass eine größere Mobilität der Vorrichtung durch Unabhängigkeit von vor Ort vorhandenen Energiequellen gegeben ist.

Weiters kann nach der Membranfiltereinrichtung ein pH-Meter angeordnet sein, sodass z.B. die Zudosierung von Mineralstoffen exakter erfolgen kann. Damit kann aber auch eine Funktionsstörung, z.B. in der Membran, festgestellt werden.

Durch die Anordnung der Anschlüsse für einen Lösungszulauf, einen Lösungsmittelablauf und einen Konzentratablauf an einer äußeren Oberfläche des Behälters, wird die Handhabbarkeit der Vorrichtung für den Verwender vereinfacht, indem der Behälter für die Inbetriebnahme der Vorrichtung nicht mehr geöffnet werden muss.

Die Erfindung umfasst weiters die Verwendung der Vorrichtung zur Trinkwassererzeugung, insbesondere aus Wasser mit hohem Gehalt an gelösten Salzen, z.B. aus Meerwasser.

Zum besseren Verständnis wird diese anhand der folgenden Fig. näher erläutert.

Es zeigen in jeweils schematisch vereinfachter Darstellung:
- Fig. 1: eine in einem Handkoffer angeordnete erfindungsgemäße Vorrichtung;
- Fig. 2: ein Anlagenschema der Vorrichtung nach Fig. 1;
- Fig. 3: ein Anlagenschema einer Ausführungsvariante der Vorrichtung;
- Fig. 4: ein Anlagenschema einer weiteren Ausführungsvariante der Vorrichtung;
- Fig. 5: ein Anlagenschema einer weiteren Ausführungsvariante der Vorrichtung;
- Fig. 6: ein Anlagenschema einer weiteren Ausführungsvariante der Vorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

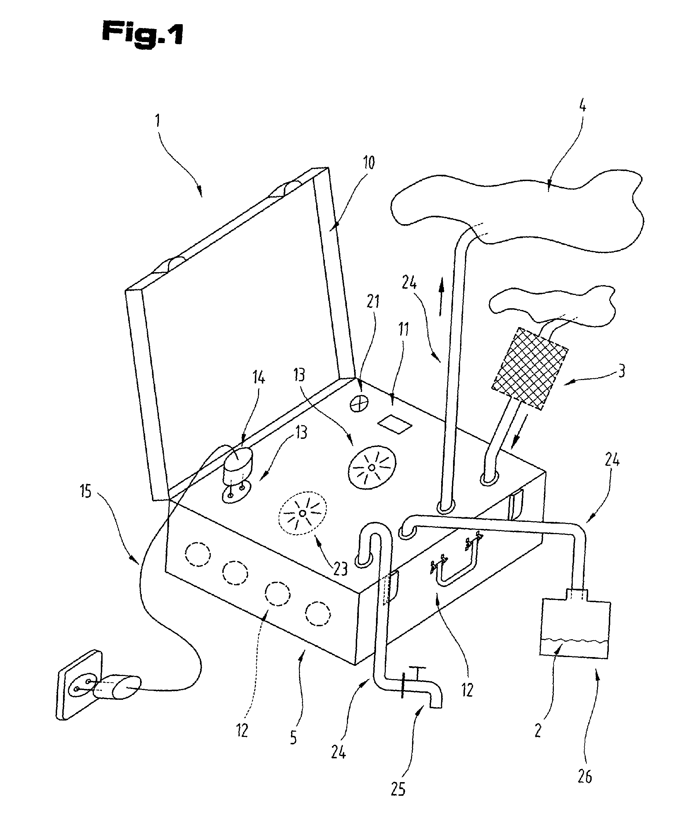

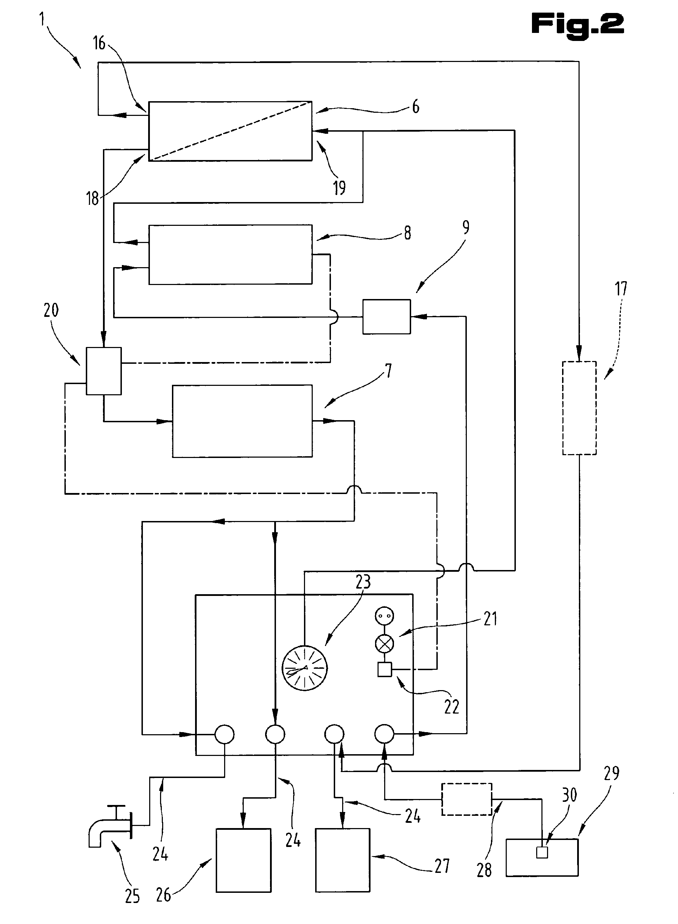

Die Fig. 1 und 2 zeigen eine erste Ausführungsvariante einer Vorrichtung 1 zur Abtrennung eines Lösungsmittels 2 aus einer Lösung 3.

Es sei bereits jetzt darauf hingewiesen, dass die in den einzelnen Ausführungsvarianten dargestellten und im folgenden beschriebenen Bauteile der Vorrichtung 1 bei Bedarf jederzeit beliebig kombiniert werden können, dass also die folgende Beschreibung spezieller Ausführungsvarianten nicht limitierend ist, und wurde die Aufteilung der Bestandteile der Vorrichtung 1 auf verschiedene Ausführungsvarianten der Erfindung auch zur übersichtlicheren Darstellung der Erfindung gewählt.

Weiters sind Strömungsrichtungen in den Fig. mit Pfeilen angedeutet.

Die Vorrichtung 1 wird bevorzugt zur Herstellung von Trinkwasser, insbesondere aus Wasser mit hohem Gehalt an gelösten Salzen, wie z.B. Meerwasser, verwendet.

Selbstverständlich können aber auch andere Lösungsmittel 2 als Wasser aus unterschiedlichen Lösungen 3 gewonnen werden, beispielsweise ist die Aufbereitung von Ölemulsionen oder die Aufarbeitung von Lackrückständen möglich. Des weiteren kann nicht nur das Lösungsmittel 2 selbst als mögliches Produkt im Vordergrund stehen, sondern können durch die Aufkonzentrierung der Lösung 3 auch Konzentrate 4 ein mögliches Produkt darstellen. Stellvertretend seien hier nur die Herstellung von Fruchtsaftkonzentraten ohne Aromaverlust, die Rückgewinnung von Silber aus Lösungen aus der photochemischen Industrie oder die Herstellung konzentrierter wässriger Lösungen in der pharmazeutischen Industrie genannt. Des weiteren kann auch der Reinheitsgrad des mit der Vorrichtung 1 gewonnen Lösungsmittels 2 variieren, beispielsweise von Trinkwasserqualität bis zum Kesselspeisewasser reichen. Aufgrund dieser unterschiedlichen Varianten können auch die verwendeten Bestandteile der Vorrichtung 1, in Hinblick auf ihre Trennleistung an den jeweiligen Verwendungszweck der Vorrichtung 1 angepasst, variieren.

Die Vorrichtung 1 umfasst einen tragbaren Behälter 5, der nach dem Ausführungsbeispiel nach Fig. 1 als Handkoffer ausgebildet ist. Dieser Behälter 5 kann zumindest teilweise aus einem Metall, wie z.B. Aluminium, gebildet sein. In einer bevorzugten Ausführungsvariante wird dieser Behälter 5 durch einen handelsüblichen Aluminiumkoffer, wie er z.B. für Photoausrüstungen oder Werkzeuge gebräuchlich ist, gebildet.

Andererseits ist es möglich, dass der Behälter 5 aus zumindest einem Kunststoff, z.B. aus einem Duroplast wie Aminoplaste, Epoxid-Kunststoffe, Polyesterkunststoffe, etc. bzw. aus einem Schaumstoff, wie Polyurethan, Polystysrol, Polyolefinschaumstoffe, etc. zumindest teilweise besteht. Weiters ist es möglich, dass entweder ein durchsichtiger Kunststoff diesen Behälter 5 zumindest teilweise bildet oder das zumindest in einer Behälterseitenwand eine Aussparung vorgesehen ist, die mit Glas oder wiederum einem durchsichtigen Kunststoff abgedeckt wird. Es soll damit ein Einblick in das Innere des Behälters 5 ermöglicht werden, sodass, insbesondere wenn das Leitungssystem zwischen den einzelnen Bauteilen im Behälter 5 ebenfalls aus einem durchsichtigen Kunststoff gebildet sind, die Vorgänge während des Betriebes der Vorrichtung 1 mitverfolgt werden können ohne das dabei der Behälter 5 geöffnet werden muss. Damit kann vorzeitig auf sich ankündigende Betriebsstörungen, z.B. eine mögliche Verstopfung des Leitungssystems des Behälters 5, reagiert werden.

Der Behälter 5 kann fahrbar ausgebildet sein, und z.B. über Rollen bzw. Räder verfügen wie dies aus handelsüblichen Reisekoffern bekannt ist. Selbstverständlich ist es aber auch möglich den Behälter 5 auf einem eigenen fahrbaren Gestell anzuordnen bzw. zu montieren. Dieses Gestell kann, insbesondere wenn als Behälter 5 ein Handkoffer verwendet wird, mit einem teleskopartig ausziehbaren Handgriff versehen sein, sodass die Handhabbarkeit der Vorrichtung 1 für den Verwender beim Transport erleichtert ist.

Im Inneren des Behälters 5 ist eine Membranfiltereinrichtung 6 angeordnet. Diese wird in der bevorzugten Ausführungsform durch eine Umkehr ― Osmose ― Einheit gebildet. Derartige Umkehr ― Osmose ― Einheiten umfassen eine semipermeable Membran, welche nur eine Permeation des Lösungsmittels 2 und nicht der in der Lösung 3 gelösten Salze erlaubt. Damit wird die Abtrennung des Lösungsmittels 2 sowie gleichzeitig die Aufkonzentrierung der Lösung 3 ermöglicht.

Die Membran kann als Platten-, Wickel-, Rohr-, Kapillar- oder Holfasermembran ausgebildet sein und aus unterschiedlichsten organischen bzw. anorganischen Werkstoffen wie Polysulfonen, Keramiken, wie z.B. Aluminiumoxid oder Zirkoniumoxid, Kohlenstofffasern, Polymerfilmen, z.B. aus Zelluloseacetat, Zellulosetriacetat, Zellulosepropionat, Polyvinyalkohol, Zelluloseacetat-Butyrat, Ethyl-Zellulose-Metyhlmetacrylat etc. gebildet sein. Die verwendbare Porengröße der Membran richtet sich dabei nach den gewünschten Durchflussmengen sowie der gewünschten Trennleistung und nimmt die Durchflussmenge mit abnehmenden Porendurchmesser naturgemäß ab.

Anstelle der Umkehr-Osmose-Einheit ist es weiters möglich eine Ultrafiltrations- Einheit bzw. eine Membran-Mikrofiltrationseinheit anzuordnen, wobei die Membranmaterialen für diese Einheiten ähnlich bzw. identisch ausgebildet sein können. Welche der genannten Einheiten in der Vorrichtung 1 verwendet wird, richtet sich nach der erforderlichen Trennkapazität bzw. der Beladung der Lösung 3 mit darin gelösten Substanzen, wie z.B. Salzen.

Selbstverständlich können auch mehr als eine dieser Membranfiltereinrichtungen 6 in der Vorrichtung 1 verwendet werden, wodurch zum einen eine größere Volumenkapazität zur Verfügung gestellt werden kann und es zum anderen möglich ist, während Wartungsarbeiten an der Vorrichtung 1 immer zumindest eine dieser Membranfiltereinrichtungen 6 in Betrieb zu halten.

Zur Herstellung von Trinkwasser mit der Vorrichtung 1 wird vorzugsweise eine Umkehr-Osmose-Einheit mit einer Dünnschicht-Verbundmembran mit spiralförmiger Anordnung der Membran, wie dies z.B. aus der GB 2 194 524 A bekannt ist, verwendet. Es können damit zwischen 90 % und 99,5 % der gelösten Salze, wie z.B. Vanadium-, Cadmium-, Calcium-, Kupfer-, Kalium-, Selen-, Silber-, Natrium-, Blei-, Magnesium-, Nickel- Salze, wie Bicarbonate, Chromate, Silikate, Fluoride, Nitrate, Sulfate, etc. entfernt werden. Eine höhere Trennleistung lässt sich mit Membranen mit geringerer Porengröße erreichen, sodass das damit hergestellte Wasser auch für klinische Zwecke verwendbar ist.

Bei Verwendung von Membranen mit einer Porengröße im Bereich von 10⁻⁴ µm können auch größere Bakterien zurückgehalten und im Konzentrat 4 angereichert werden.

In der Vorrichtung 1 ist weiters zumindest eine Filtereinrichtung 7 angeordnet. Diese Filtereinrichtung 7 ist bevorzugt als Kohlefilter, z.B. mit Aktivkohlepartikel ausgebildet, wobei die Filtermasse auch mit Marmor oder Dolomit versetzt sein kann. Durch das Adsorptionsvermögen der Aktivkohle kann eine weitere Aufreinigung des Lösungsmittels 2 erfolgen und können aus Wasser z.B. auch Geschmacksstoffe im Filterbett zurückgehalten werden. Durch den Zusatz von Marmor und/oder Dolomit wird einerseits erreicht dass das Filterbett nicht mit gesundheitsgefährdenden Bakterien verunreinigt wird und kann zugleich in begrenztem Umfang eine gewollte Mineralisation des Wassers mit Calcium- bzw. Magnesiumionen erfolgen. Werden andere Lösungsmittel 2 aus der Lösung 3 abgetrennt bzw. ist eine derartige Mineralisation nicht erwünscht, kann selbstverständlich auf den Zusatz von Marmor oder Dolomit zum Kohlefilter verzichtet werden. Andererseits kann die Filtereinrichtung 7 auch durch andere Filter, wie z.B. Sandbettfilter bzw. andere adsorptive Filter, Filterpapiere, die gegebenenfalls mit Kunstharz imprägniert bzw. acetyliert und/oder mit Aktivkohleteilchen versetzt bzw. mit anderen Fasern, z.B. Kunststofffasern, Kohlefasern versetzt sein können, gebildet sein. Des weiteren ist es möglich, dass für den Fall dass die Trennleistung der Membranfiltereinrichtung 6 ausreicht, auf die Filtereinrichtung 7 verzichtet werden kann. Zur Herstellung von Trinkwasser ist deren Anordnung in der Vorrichtung 1 jedoch vorteilhaft.

Bei der Vorrichtung nach der Ausführungsvariante entsprechend den Fig. 1 und 2 ist im Behälter 5 eine Fördereinrichtung 8 angeordnet. Damit wird einerseits die Lösung 3 bzw. die Lösungsmittel 2 durch das Leitungssystem der Vorrichtung 1 befördert und zum anderen wird der erforderliche statische Druck zur Überwindung des osmotisches Druckes in der Umkehr-Osmose-Einheit aufgebaut. Die Fördereinrichtung 8 kann als Pumpe, z.B. als Einspritzpumpe ausgebildet sein, wobei Pumpen mit einem Arbeitsdruck von 60 bar ― 80 bar eingesetzt werden können, die Durchflussmengen von 10 l/h ― 15 l/h ermöglichen.

Wird die Vorrichtung an eine ortsübliche Wasserleitung angeschlossen, so ist es unter Umständen möglich, dass der in der Wasserleitung vorhandene Druck bereits ausreichend ist um den osmotischen Druck zu überwinden, insbesondere wenn bereits vorgereinigtes Wasser eingesetzt wird, wie dies bei Ortswasserleitungen der Fall ist. Da die Anzahl der gelösten Teilchen pro Mol im Vergleich zu Meerwasser deutlich geringer ist, ist auch der zu überwindende resultierende osmotische Druck für dieses Wasser niedriger. Andererseits kann aber auch, wie aus dem eingangs erwähnten Stand der Technik bekannt, ein gasförmiges Medium wie, z.B. CO₂, Stickstoff oder ein Edelgas zum Aufbau und zur Beförderung der Lösung 3 durch die einzelnen Bauteile der Vorrichtung 1 verwendet werden wobei ein entsprechender Gasdruck zur Verfügung gestellt werden muss.

Die einzelnen Bauteile der Vorrichtung 1, wie die Membranfiltereinrichtung 6, die Filtereinrichtung 7, sowie die gegebenenfalls vorhandene Fördereinrichtung 8 sind im Behälter 5 vorzugsweise in eigenen Aufnahmen angeordnet (in Fig. 1 bzw. 2 nicht dargestellt), wobei diese einen Klemmsitz für die genannten Einrichtungen zur einfacheren Demontage der Vorrichtung aufweisen können. Andere Befestigungsmethoden, z.B. mittels Schrauben, Klebstoffen etc. sind zumindest für einzelne der Einrichtungen denkbar.

Zum Schutz der beweglichen Teile der Fördereinrichtung 8 bzw. um einer Verschmutzung derselben, z.B. durch Bewachs mit Mikroorganismen, vorzubeugen ist in der Vorrichtung 1 vorzugsweise ein Vorfilter 9 strömungsverbunden mit der Fördereinrichtung 8 angeordnet. Dieses Vorfilter 9 kann als mechanisches Vorfilter, z.B. als Sieb für Partikel in der Lösung 3 ausgebildet sein und eine Maschenweite im Bereich von 5 mm bis 5 mesh, insbesondere 2 mm bis 10 mesh aufweisen. Möglich ist auch ein mehrstufiges Vorfilter 9 bzw. mehrere Vorfilter 9 anzuordnen, wobei in Strömungsrichtung der Lösung 3 ein erstes Vorfilter 9 eine Maschenweite von 400 mesh aufweisen und ein daran anschließender Vorfilter 9 mit 10 mesh ausgebildet sein kann. Anstelle von Siebfiltern können andere Filterarten, wie z.B. Sandbettfilter bzw. generell Filter mit Partikelfüllung oder Filter mit Filtermatten, Druckfilter, etc. verwendet werden.

Im Inneren des Behälters 5, z.B. unterhalb eines Deckels 10 ist bei der Ausführung des Behälters 5 als Handkoffer eine Abdeckung 11, die insbesondere plattenförmig ausgebildet ist, vorgesehen, wodurch die darunter angeordneten Bauteile der Vorrichtung 1, wie die Membranfiltereinrichtung 6, die Filtereinrichtung 7 oder die Fördereinrichtung 8 selbst bei geöffnetem Behälter 5 vor äußeren Einflüssen geschützt sind.

Auf dieser Abdeckung 11 können sämtliche Anschlüsse, wie z.B. für die Energieversorgung, für die Lösung 3, das Lösungsmittel 2 bzw. das Konzentrat 4, angeordnet sein Damit sind diese Anschlüsse während des Transportes des Behälters 5 vor Zerstörung geschützt. Selbstverständlich könne diese Anschlüsse nicht nur im Bereich des Deckels auf der Abdeckung 11 angeordnet sein, sondern kann der Behälter 5 auch im Bereich einer Seitenwand 12 öffenbar ausgebildet sein, sodass bei alternativer oder zusätzlicher Anordnung der bzw. einzelner Anschlüsse im Bereich der Seitenwand diese zugängig werden. Des weiteren ist es möglich die Anschlüsse wie dies Fig. 1 strichliert dargestellt ist in zumindest einer der Seitenwände 12 anzuordnen wodurch deren Zugängigkeit bzw. die Inbetriebnahme der Vorrichtung 1 erleichtert wird.

Zur Energieversorgung weist die Vorrichtung 1 einen Energieversorgungsanschluss 13, beispielsweise in der Abdeckung 11, auf. An diesen Energieversorgungsanschluss 13 ist über einen Stecker 14 ein Energieversorgungskabel 15 anschließbar, welches wiederum an die Energieversorgung angeschlossen werden kann. Die Energieversorgung kann z.B. über ein öffentliches Energienetz oder unabhängig davon über einen Akkumulator, wie z.B. über eine Autobatterie, erfolgen. Des weiteren ist es möglich, dass zur Versorgung der Vorrichtung 1 bzw. deren Bestandteile zumindest eine Solarzelle verwendet wird, wobei in diesem Fall auch zumindest ein Behälterteil, z.B. der Deckel 10 und/oder eine der Seitenwände 12 durch die Solarzelle gebildet sein können. Durch diese Varianten wird die Mobilität der Vorrichtung 1 erhöht, sodass diese jederzeit auch ohne Stromversorgung aus einem öffentlichem Netz einsatzbereit ist.

Da das aus der Membranfiltereinrichtung 6 austretende Konzentrat 4 unter Umständen als Umweltgefährdender Sondermüll einzustufen ist, z.B. wenn mittels der Membranfiltereinrichtung 6 auch Bakterien im Konzentrat zurückgehalten werden, kann, wie dies Fig. 2 strichliert dargestellt ist, nach einem Konzentratausgang 16 der Membranfiltereinrichtung 6 und mit dieser strömungsverbunden ein Konzentratfilter 17 und/oder zumindest ein Ionentauscher angeordnet sein, wodurch eine Reduktion von umweltgefährdenden Inhaltsstoffen des Konzentrats auf ein umweltverträgliches Niveau ermöglicht wird und somit das Konzentrat jederzeit an die Umwelt abgegeben werden kann. Dieses Konzentratfilter 17 ist jedoch nur optional zu sehen, da z.B. bei der Trinkwassererzeugung aus Meerwasser das Konzentrat ohne Bedenken wiederum in das Meer eingeleitet werden kann.

Die Membranfiltereinrichtung 6 weist neben dem Konzentratausgang 16 weiters einen Lösungsmittelsausgang 18 und selbstverständlich auch einen Eingang 19 für die Lösung 3 auf. An den Lösungsmittelausgang 18 ist mit der Membranfiltereinrichtung 6 strömungsverbunden eine Messeinrichtung 20 im Behälter 5 angeordnet. Diese Messeinrichtung 20 kann durch eine Druck-, eine Leitfähigkeits- oder eine Durchflussmengemesszelle gebildet sein.
Es können auch mehrere der Messeinrichtungen 20 angeordnet werden. Durch diese Messeinrichtung 20 kann, beispielsweise wenn diese als Druck- oder als Durchflussmengemesszelle ausgebildet ist, laufend die Durchlässigkeit der Membran der Membranfiltereinrichtung 6 überwacht werden, sodass beim Auftreten des Membran-Foulings, also der Belegung der Membran, durch Veränderung des Messwertes eine entsprechende Maßnahme durch den Verwender der Vorrichtung 1 bzw. vollautomatisch durch die Vorrichtung 1 selbst gesetzt werden kann. Der Messwert, z.B. der durch die Fördereinrichtung 8 erzeugte und durch die Bauteile der Vorrichtung 1 entsprechend reduzierte Druck oder die Durchflussmenge, kann dabei innerhalb eines vordefinierbaren Bereiches, der je nach Art und Zusammensetzung der Lösung 3 definiert sein kann, schwanken ohne das dem Verwender der Vorrichtung 1 bzw. der Vorrichtung 1 selbst eine entsprechende Störung weitergeleitet wird. Bei der Ausbildung der Messeinrichtung 20 als Leitfähigkeitsmesszelle lässt sich damit zudem feststellen ob die Membran noch eine ausreichende Trennleistung aufweist bzw. ob die Membran anderwertige Schäden, wie z.B. Risse oder dergleichen, aufweist und damit abzutrennende Salze in den an die Membranfiltereinrichtung 6 anschließenden Leitungsteil für das Lösungsmittel 2 eintreten, wodurch wiederum ein entsprechendes Verhalten des Verwenders bzw. der Vorrichtung ausgelöst werden kann.

Die Messeinrichtung 20 ist mit einer Anzeige und/oder Steuereinrichtung 21 bzw. 22 verbunden (Leitungsverbindungen sind in Fig. 2 strichpunktiert dargestellt).

In der einfachsten Ausführung ist die Anzeigeeinrichtung 21 durch zumindest eine Kontrolllampe bzw. Kontroll-LED's gebildet, wobei, um unterschiedlichste Betriebszustände anzeigen zu können, diese in verschiedenen Farben, beispielsweise grün für ungestörten Betrieb, rot für eine Betriebsstörung, orange um eine in Kürze zu erwartende erforderliche Wartung anzuzeigen, ausgeführt sein können. Dazu kann der tolerierbare Messwertbereich in mehrere Einzelwertbereiche unterteilt sein und diese Teilbereiche den entsprechenden Farben zugeordnet werden.

Um die genauen Messwerte anzeigen zu können, ist es möglich, in der Vorrichtung 1 beispielsweise an der Abdeckung 11 ein Display, beispielsweise ein Flüssigkristalldisplay, anzuordnen. Möglich sind aber auch herkömmliche analoge Anzeigeinrichtungen 21, wie z.B. ein Manometer 23.

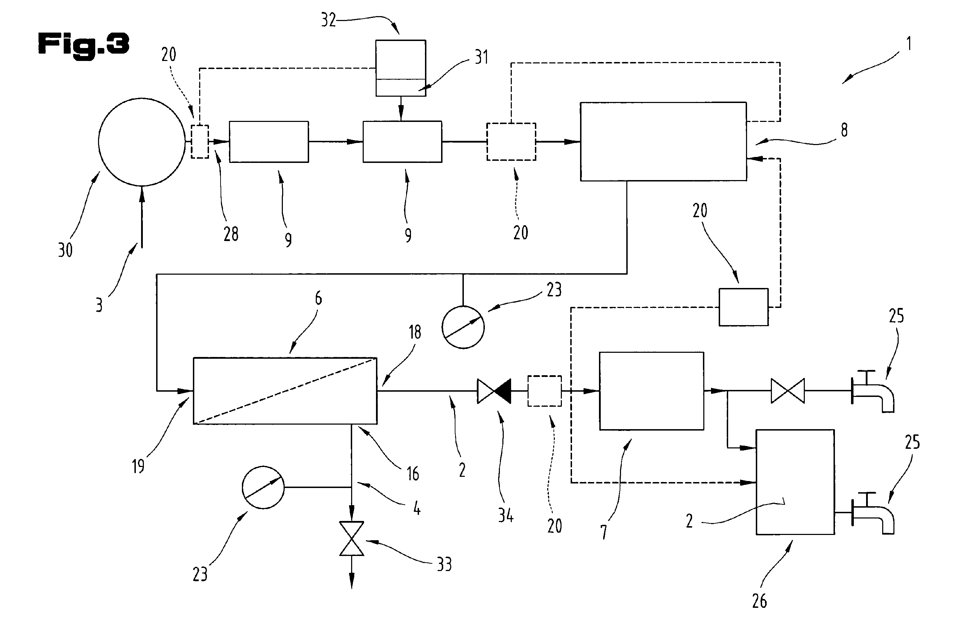

Zusätzlich ist es möglich auch einen entsprechenden Messwert am Eingang 19 an der Membranfiltereinrichtung 6 zu messen und beispielsweise über ein Manometer 23 anzuzeigen (in Fig. 3 dargestellt). Die Manometer können in der Abdeckung 11 des Behälters 5 angeordnet sein.

Obwohl nicht dargestellt, kann die Messeinrichtung 20 auch, in Strömungsrichtung des Lösungsmittels 2 betrachtet, nach der Filtereinrichtung 7 angeordnet werden.

Mit Hilfe der Steuereinrichtung 22 können, wie dies zu den weiteren Ausführungsvarianten noch ausgeführt wird, diverse Einstellungen im Leitungssystem des Behälters 5 verändert werden.

Die Messeinrichtung 20 kann mit einem Mikroprozessor leitungsverbunden sein. In diesem Mikroprozessor können diverse Softwareroutinen hinterlegt sein, wodurch z.B. eine Spracherkennung und/oder -ausgabe und damit eine entsprechende Vereinfachung der Bedienung der Vorrichtung 1 ermöglicht werden kann. Hierzu können in der Vorrichtung 1, z.B. in der Abdeckung 11, entsprechende Einrichtungen wie ein Lautsprecher und ein Mikrofon angeordnet werden.

Des weiteren ist es möglich, eine Regelung über den Mikroprozessor vorzunehmen, beispielsweise wenn in Strömungsrichtung der Lösung 3 vor dem Eingang 19 der Membranfiltereinrichtung 6, insbesondere vor der Fördereinrichtung 8, eine Leitfähigkeitsmesszelle oder ein TDS-Meter angeordnet ist. Dadurch kann eine Drehzahlregulierung der Fördereinrichtung 8 erfolgen, da bekanntlich der osmotische Druck von der Anzahl der Teilchen pro Mol abhängig ist. Durch diese Regelung ist es nicht nur möglich die Vorrichtung 1 energieschonend zu betreiben, beispielsweise auch mit einer Spannung im Bereich von 12 V, sondern können damit auch die Wartungsintervalle der Bauteile der Vorrichtung 1, insbesondere der Fördereinrichtung 8, sowie die Lebensdauer der selben verlängert werden.

Der 12 V Betrieb ist selbstverständlich auch bei Lösungen 3 mit geringen Salzgehalten möglich.

Um die Kompaktheit der Vorrichtung 1 zu erhöhen, können die Messeinrichtung 20 und/oder die Steuereinrichtung 22 und/oder der Mikroprozessor einen einzigen Bauteil bilden. So ist es z.B. möglich, dass bei Ausbildung der Messeinrichtung 20 als Druckmesszelle diese gleichzeitig einen Druckschalter, der leitungsverbunden mit der Fördereinrichtung 8 ist, aufweist. Dadurch kann z.B. wenn der Druck im Leitungssystem der Vorrichtung 1 unter einem gewissen Wert fällt, z.B. wenn eine unzureichende Menge an Lösung 3 zugeführt wird, die Fördereinrichtung 8 automatisch ausgeschaltet werden. Entsprechende Ausbildungen sind selbstverständlich auch bei Ausbildung der Messeinrichtung 20 als Leitfähigkeits- bzw. Durchflussmengenmesszelle möglich, wobei diese ebenfalls einen Schalter für die Fördereinrichtung 8 umfassen können.

Des weiteren ist es über den Mikroprozessor möglich, eine Temperaturregelung der Lösung 3 durchzuführen, wozu in der Vorrichtung 1 eine entsprechende Temperaturmesseinrichtung, wie z.B. ein Thermoelement, einen Thermistor, eine Thermometer, ein Thermostat angeordnet sein kann. Dadurch wird eine Überhitzung des Systems verhindert.

Die Entnahme des Lösungsmittels 2 aus der Vorrichtung 1 kann über eine Leitung 24, an der z.B. ein Hahn 25 angeschlossen ist oder direkt in einen Vorratsbehälter 26 erfolgen. Der Vorratsbehälter 26 ist vorzugsweise extern an die Vorrichtung 1 anschließbar, kann jedoch selbstverständlich auch in der Vorrichtung 1 angeordnet sein.

Das Konzentrat 4 kann ebenfalls über eine Leitung 24 entweder, wie bereits beschrieben, direkt in die Umgebung abgegeben werden oder in einem vorzugsweisen externen Sammelbehälter 27 aufgefangen werden, wobei dieser Sammelbehälter 27 aber auch einen Teil der Vorrichtung 1 darstellen kann. Aufgrund der zu erwartenden Volumina ist jedoch die externe Anordnung des Vorratsbehälters 26 bzw. des Sammelbehälters 27 bevorzugt.

Im Betriebszustand der Vorrichtung 1 wird die Lösung 3 über eine Saugleitung 28 entweder direkt der Umwelt, beispielsweise dem Meer, einem Fluss, einem See oder einem eigenen Einspeisebehälter 29 entnommen. Der Einspeisebehälter 29 sollte dabei, in bezug auf die Höhe, oberhalb der Vorrichtung 1 angeordnet werden, um zum einen eine kontinuierliche Versorgung der Einspritzpumpe und zum anderen eine Kavitation in den Bauteilen der Vorrichtung 1 zu vermeiden. Der Einspeisebehälter 29 kann für einen kontinuierlichen Betrieb mit handelsüblichen Pumpen kontinuierlich oder diskontinuierlich mit der Lösung 3 befüllt werden. Dabei ist es möglich diese Pumpe an die Steuereinrichtung 22 bzw. den Mikroprozessor der Vorrichtung 1 anzuschließen um eine automatische Nachfüllung, beispielsweise in Abhängigkeit von der Durchflussmenge zu ermöglichen.

In der Saugleitung 28 für die Lösung 3 kann außerhalb des Behälters 5 ein weiterer mechanischer Vorfilter, insbesondere ein Partikelfilter, wie z.B. ein Sieb, mit einer Maschenweite im Bereich von 2 mm und 10 mm, vorzugsweise 2 mm, angeordnet sein, wodurch eine Grobfiltrierung der Lösung 3 bereits vor deren Eintritt in die Vorrichtung 1 erfolgt und damit das Leitungssystem die Vorrichtung 1 vor Verschmutzung geschützt werden. Zudem kann die Saugleitung 28 als schwimmende Entnahme mit einem Schwimmkörper 30 ausgebildet sein, wobei eine Eintauchtiefe der Saugleitung in die Lösung 3 vordefinierbar ist. Damit kann gewährleistet werden, dass beispielsweise im Fall der Trinkwasseraufbereitung nur Oberflächenwasser angesaugt wird und somit verhindert wird, dass z.B. Sedimente oder feiner Kies von Seen oder vom Meeresgrund angesaugt wird.

Die Saugleitung 28 ist an den entsprechenden Anschluss in der Vorrichtung 1 angeschlossen, wodurch die Strömungsverbindung mit dem Vorrat an Lösung 3, z.B. dem Einspeisebehälter 29 hergestellt wird. Die Anschlüsse der Vorrichtung 1 für die einzelnen Flüssigkeitsströme, also für die Lösung 3, das Lösungsmittel 2 sowie das Konzentrat 4 können als Steckanschlüsse, Schraubanschlüsse, Schnellkupplungen, etc. ausgebildet sein. Als vorteilhaft hat sich sicher erwiesen, wenn für die Entnahme des Lösungsmittels 2 ,beispielsweise des Trinkwassers, zwei separate Anschlüsse in der Vorrichtung 1 angeordnet sind, beispielsweise einer für den Hahn 25 sowie einer für den Vorratsbehälter 26, sodass eine parallele Entnahme an gereinigtem Lösungsmittel 2 sowie Auffüllung des Vorratsbehälters 26 möglich ist.

Zur Erhöhung der Bedienungsfreundlichkeit sowie um eine Verwechslungsgefahr bei den einzelnen Flüssigkeitsströmen zu vermeiden hat es sich als besonders vorteilhaft erwiesen , wenn die jeweiligen Anschlüsse sowie die Strömungsverbindungen zwischen den einzelnen Bauteilen in der Vorrichtung 1 unterschiedlich markiert, z.B. mit unterschiedlichen Farben ausgebildet, sind. So ist es z.B. möglich, die Zuleitung für die Lösung 3 sowie den Anschluss hierfür, die Strömungsverbindung im Anschluss zur Fördereinrichtung 8 und die Strömungsverbindung zwischen der Fördereinrichtung 8 und der Membranfiltereinrichtung 6 blau, die Strömungsverbindung zwischen der Membranfiltereinrichtung 6 und der Messeinrichtung 20, die Strömungsverbindung zwischen der Messeinrichtung 20 und der Filtereinrichtung 7 gelb, die Strömungsverbindung zwischen der Filtereinrichtung 7 und den Anschlüssen für den Hahn 25 sowie den Vorratsbehälter 26 grün sowie die Strömungsverbindung zwischen der Membranfiltereinrichtung 6 und dem Anschluss für den Konzentratablauf rot zu gestalten. Des weiteren ist es möglich, die Anschlüsse mit unterschiedlichen Durchmessern auszubilden, sodass ein Verwechslungsgefahr bei Anschluss der diversen externen Leitungen weiter vermindert werden kann.

Die in die Saugleitung 28 angesaugte Lösung 3 wird über den zumindest einen Vorfilter 9 nochmals vorgereinigt, bevor sie in die Fördereinrichtung 8, welche einerseits die Saugleistung und andererseits den erforderlichen Druck zur Verfügung stellt, gelangt. Aus der Fördereinrichtung 8 tritt die Lösung 3 in die Membranfiltereinrichtung 6 durch den Eingang 19 ein. Mit der Membran der Einrichtung erfolgt die Abtrennung des Lösungsmittels 2 durch Permeation sowie die Aufkonzentrierung der verbleibenden Lösung 3. Das daraus entstandene Konzentrat 4 wird über den gegebenenfalls vorhandenen Konzentratfilter geleitet und schließlich über einen entsprechenden Anschluss aus der Vorrichtung 1 entfernt.

Das gereinigte Lösungsmittel 2 gelangt über den Lösungsmittelausgang 18 der Membranfiltereinrichtung 6 in die Messeinrichtung 20 und von dort n die Filtereinrichtung 7, wo eine entsprechende Endreinigung erfolgt. Aus der Filtereinrichtung 7 wird das Lösungsmittel 2 den entsprechenden Anschlüssen für die Entnahme mittels Hahn 25 bzw. zur Auffüllung des Vorratsbehälters 26 zugeführt.

Durch die Messeinrichtung 20 wird indirekt die Permeationsgeschwindigkeit überwacht und das Verfahren zur Abtrennung des Lösungsmittels 2 aus der Lösung 3 bei einer Abnahme der Permeationsgeschwindigkeit, d.h. bei einer Veränderung des entsprechenden Messwertes unterbrochen, soweit der Messwert außerhalb eines vordefinierbaren Wertes liegt.

In Fig. 3 ist eine weitere Ausführungsvariante der erfindungsgemäßen Vorrichtung 1 dargestellt. Da diese sowie die weiteren Ausführungsvarianten zumindest einzelne Bauteile der Vorrichtung 1 nach den Fig. 1 und 2 enthalten können, werden diese im folgenden nicht mehr im Detail dargestellt, sondern wird hierzu auf obige Beschreibung, die entsprechend übertragbar ist, verwiesen.

Die Vorrichtung 1 nach Fig. 3 umfasst wiederum eine schwimmende Entnahme für die Lösung 3 mit einem Schwimmkörper 30. Über die Saugleitung 28 wird die Lösung 3 einer mehrstufigen Vorfiltration mit den Vorfiltern 9 zugeführt. Mit der Fördereinrichtung 8 wird der erforderliche Druck für die Membranfiltereinrichtung 6 aufgebaut und durchläuft die Lösung 3 schließlich die Filtereinrichtung 7 um danach über den Hahn 25 bzw. in den Vorratsbehälter 26, der ebenfalls mit einem Hahn 25 versehen sein kann, abgezogen zu werden.

Bei dieser Ausführungsvariante, welche insbesondere für die Entsalzung von Meerwasser vorgesehen ist, wird der Lösung 3 ein Inhibitor 31, der in einem Vorratsgefäß 32 vorrätig gehalten werden kann, beigemischt. Die Beimischung kann vorzugsweise, wie in Fig. 3 dargestellt, über den in Strömungsrichtung der Lösung gesehen zweiten Vorfilter 9 der Lösung 3 erfolgen, wodurch der Vorteil erreicht werden kann, dass mit dem Durchströmen dieses Vorfilters 9 gleichzeitig eine Homogenisierung des Inhibitors 31 in der Lösung 3 erfolgt. Selbstverständlich ist es aber auch möglich, dieses Vorratsgefäß 32 mit dem Inhibitor 31 an einer anderen Stelle in der Vorrichtung 1 anzuordnen, jedenfalls sollte die Zugabe vor der Fördereinrichtung 8 zu deren Schutz erfolgen. Durch den Inhibitor 31 sollen Anlagenbestandteile, insbesondere die Fördereinrichtung 8, die Membranfiltereinrichtung 6, die Filtereinrichtung 7 vor Korrosion geschützt werden. Als Inhibitor können anorganische und/oder organische Verbindungen, wie z.B. Phosphate, Polyphosphate, Chromate, Nitrite, Calciumcarbonat, Zinksulfat, Hydrazin, Ammoniak, Amine, oder Mischungen daraus, wie z.B. Nitrate mit Silikaten, Chromate mit Orthophosphaten, Zinksulfat mit Natriumchromat, etc., verwendet werden. Die Zudosierung kann dabei über einen Feststoff oder eine bereits hergestellte Lösung erfolgen, wobei der Feststoff auch derart beschaffen sein kann, dass die Lösung 3 diesen durchströmt und dabei entsprechend der Löslichkeit die Konzentration an Inhibitor 31 in der Lösung 3 steigt. Beispielsweise kann die Zudosierung über einen Filter mit gelöschtem Kalk oder kalziniertem Dolomit erfolgen. Möglich ist auch, dass zur Vermeidung der Korrosion eine pH-Wert Anpassung, die je nach Lösung 3 durch pH-Wert Verschiebung in den sauren oder alkalischen Bereich, oder auch durch Neutralisation erfolgen kann.

Weiters ist es möglich, dass der Inhibitor 31 bereits im Vorfilter 9 vorgelegt ist, sodass das zusätzliche Vorratsgefäß unter Umständen entfällt bzw. dieses mit dem Vorfilter 9 kombiniert ist.

Die Zudosierung des Inhibitors 31 zur Lösung 3 kann kontinuierlich oder diskontinuierlich erfolgen. Von Vorteil ist, wenn die Menge am Inhibitor 31 die zuzudosieren ist, in Abhängigkeit von der Zusammensetzung der Lösung 3 diskontinuierlich bzw. vorzugsweise kontinuierlich erfolgt. Dazu kann im Leitungssystem des Behälters 5, vorzugsweise vor den Vorfiltern 9, wie dies in Fig. 3 strichliert angedeutet ist, eine weitere Messeinrichtung 20 angeordnet sein, mit der z.B. der pH-Wert der Lösung 3 bzw. der TDS-Wert (Total Dissolved Solids in ppm), also der Gehalt an Mineralstoffen, gemessen wird und dieser Messwert an die in Fig. 3 nicht dargestellte Steuereinrichtung 22 oder direkt an die Einrichtung zur Zugabe des Inhibitors 31 weitergeleitet werden, sodass die Menge an zuzusetzendem Inhibitor 31 entsprechend geregelt werden kann. Von Vorteil ist dabei, wenn über das TDS-Meter gleichzeitig auch eine Drehzahlregulierung der Fördereinrichtung 8 entsprechend dem Salzgehalt der Lösung 3, d.h. den Anteil an Teilchen pro Mol, durchgeführt wird.

Wie in Fig. 3 dargestellt, kann ein Druckgefälle zwischen dem Eingang 19 und dem Konzentratausgang 16 der Membranfiltereinrichtung 6 gemessen und über zwei Manometer 23 angezeigt werden, sodass eine Veränderung des Druckgefälles in der Membranfiltereinrichtung 6 festgestellt und entsprechende Tätigkeiten durch den Benutzer der Vorrichtung 1, beispielsweise eine erforderliche Wartung der Membranfiltereinrichtung 6 oder ein Austausch der Membran selbst, in der Folge durchgeführt werden.

Zur Regelung des Druckgefälles in der Membranfiltereinrichtung 6, kann in Strömungsrichtung des Konzentrats 4 gesehen nach dem Konzentratausgang 16, eine Regeleinrichtung 33, z.B. ein Regelventil, strömungsverbunden mit der Membranfiltereinrichtung 6 angeordnet sein, wobei diese Regeleinrichtung 33 wiederum mit der nicht dargestellten Steuereinrichtung 22 leitungsverbunden sein kann, sodass eine automatische Regelung des hydrostatischen Druckes in der Membranfiltereinrichtung 6 möglich ist.

Weiters kann in der Strömungsverbindung zwischen der Membranfiltereinrichtung 6 und der Filtereinrichtung 7 zur Sicherheit der Membranfiltereinrichtung 6 ein Rückschlagventil 34 angeordnet werden, sodass ein unbeabsichtigtes Zurückströmen des Lösungsmittels 2, z.B. aufgrund eines negativen Druckgefälles zwischen dem Lösungsmittelausgang 18 und dem Eingang 19 der Membranfiltereinrichtung 6 ― in bezug auf die Strömungsrichtung des Lösungsmittels 2 ― verhindert werden kann.

Auch bei dieser Ausführungsvariante ist die bereits zu den Fig. 1 und 2 beschriebene Messeinrichtung 20, z.B. eine Durchflussmengenmesszelle (in Fig. 3 strichliert nach dem Rückschlagventil 34 dargestellt) oder eine Druckmesszelle, angeordnet, sodass aufgrund des in der Strömungsverbindung zwischen der Membranfiltereinrichtung 6 und der Filtereinrichtung 7 festgestellten Druckes oder der Durchflussmenge eine Regulierung der Drehzahl sowie gegebenenfalls die Abschaltung der Fördereinrichtung 8 erfolgen kann, wozu die Messeinrichtung 20 mit der Fördereinrichtung 8 leitungsverbunden ist.

Zusätzlich oder alternativ kann, wie in Fig. 3 zwischen dem Vorfilter 9 und der Fördereinrichtung 8 strichliert dargestellt, eine Messeinrichtung 20, beispielsweise wiederum eine Durchflussmengenmesszelle, vor der Fördereinrichtung 8, um z.B. eine Regulierung der Fördereinrichtung 8 vorzunehmen, angeordnet und leitungsverbunden mit der Fördereinrichtung 8 sein.

Obwohl nicht dargestellt, können selbstverständlich sämtliche Messeinrichtungen 20 mit einer Steuereinrichtung 22 verbunden sein, sodass eine zentrale Steuerung bzw. Regelung der Vorrichtung 1 ermöglicht wird.

Wie weiters aus Fig. 3 ersichtlich ist, ist es möglich, die Strömungsverbindung zum Leitungssystem der Vorrichtung 1 für die Befüllung des Vorratsbehälters 26 vor oder nach der Filtereinrichtung 7 anzuordnen, wobei durch die Anordnung vor (Fig. 3 strichliert dargestellt) eine raschere Befüllung des Vorratsbehälters 26 möglich ist und durch die Anordnung nach der Filtereinrichtung 7 eine bessere Qualität des Lösungsmittels 2 im Vorratsbehälter 26 erreicht werden kann. Durch diese optionale Verbindung des Vorratsbehälters 26 über die entsprechenden Anschlüsse in der Vorrichtung 1 kann somit der Reinheitsgrad des Lösungsmittels 2 an die jeweiligen Erfordernisse angepasst werden, sodass beispielsweise im Vorratsbehälter 26 Wasser mit geringerer Qualität, z.B. für Duschen, aufgefangen werden kann und dieses Wasser nicht unbedingt Trinkwasserqualität aufweisen muss.

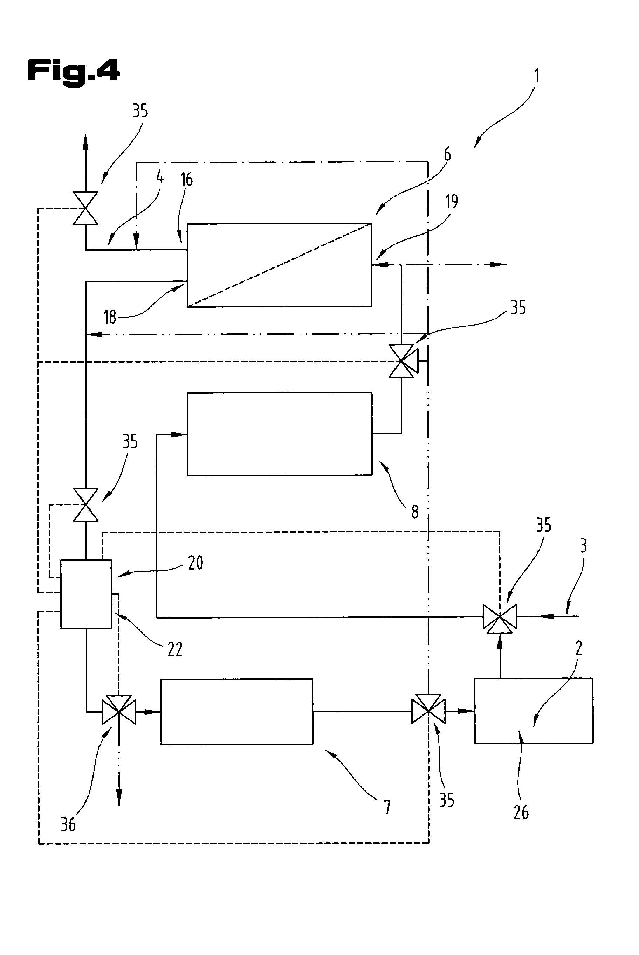

In Fig. 4, welche eine weitere Ausführungsvariante der erfindungsgemäßen Vorrichtung 1 zeigt, sowie in allen nachfolgenden Fig., sind aus Gründen der Übersichtlichkeit nur mehr die wesentlichen Details dargestellt. Für weitere, nicht dargestellt Bauteile der Vorrichtung 1, welche bei diesen Ausführungsvarianten ebenfalls Verwendung finden können, sei auf die voranstehende Beschreibung verwiesen.

Diese Ausführungsvariante betrifft insbesondere die Spülung der Membranfiltereinrichtung 6, z.B. die Umkehrung der Strömungsrichtung der Lösung 3 durch die Membranfiltereinrichtung 6, um die Membran von niedergeschlagenen Substanzen bzw. Salzen Freizuspülen. Hierfür ist im Leitungssystem der Vorrichtung 1 zumindest eine Einrichtung 35 zur Unterbrechung bzw. Änderung der Strömungsrichtung der Lösung 3 bzw. des Lösungsmittels 2, z.B. ein Zwei- oder Dreiwegeventil, angeordnet und mit der Steuereinrichtung 22 leitungsverbunden (strichliert dargestellt).

Im konkreten Ausführungsbeispiel nach Fig. 4 befindet sich jeweils eine Einrichtung 35 zur Unterbrechung bzw. Änderung der Lösung 3 bzw. des Lösungsmittels 2 in der Strömungsverbindung zwischen der Fördereinrichtung 8 und der Membranfiltereinrichtung 6 sowie in der Strömungsverbindung zwischen der Membranfiltereinrichtung 6 und der Filtereinrichtung 7. Weiters ist in der Strömungsverbindung zwischen der Filtereinrichtung 7 und dem Vorratsbehälter 26 für das Lösungsmittel 2 ein Dreiwegeventil sowie nach dem Konzentratausgang 16 ein Sperrventil angeordnet. Dadurch wird es ermöglicht, dass im Sinne der Erfindung reines Lösungsmittel 2 aus dem Vorratsbehälter 26 anstelle von Lösung 3 durch die Fördereinrichtung 8 angesaugt und dem Eingang 19 der normalerweise für die Lösung 3 verwendet wird, zugeführt wird, sodass die Membranfiltereinrichtung 6 in normaler Strömungsrichtung von reinem Lösungsmittel 2 durchströmt wird und dabei auf der Membran niedergeschlagene Salze mitnimmt bzw. auflöst und über den Konzentratausgang 16 aus der Membranfiltereinrichtung 6 befördert und somit eine Reinigung der Membran möglich ist.

In einer Ausführungsvariante hierzu ist es möglich, wie dies in Fig. 4 strichpunktiert dargestellt ist, dass reine Lösungsmittel 2 nicht dem Eingang 19 sondern dem Konzentratausgang 16 der Membranfiltereinrichtung 6 zuzuführen, sodass die Membran bzw. Membranfiltereinrichtung 6 in umgekehrter Strömungsrichtung, d.h. entgegen der Strömungsrichtung der Lösung 3 durchströmt wird und kann die Membranfiltereinrichtung 6 nunmehr für das mit den Salzen beladenen Lösungsmittels 2 einen entsprechenden Ausgang, wie dies in Fig. 4 strichpunktiert dargestellt ist, aufweisen. Um dabei zu verhindern, dass das Lösungsmittel 2 die Vorrichtung 1 über den Anschluss für das Konzentrat 4 an der Vorrichtung 1 verlässt, ist optional in der Vorrichtung 1 besagte Einrichtung 35 zur Unterbrechung der Strömungsverbindung, wie z.B. das Sperrventil, angeordnet.

Weiters ist es möglich, wie dies in Fig. 4 strichzweipunktiert dargestellt ist, dass das reine Lösungsmittel 2 dem Lösungsmittelausgang 18 der Membranfiltereinrichtung 6 zugeführt wird und ebenfalls in eben beschriebener Weise aus der Membranfiltereinrichtung 6 sowie der Vorrichtung 1 ausgetragen wird.

Um zu vermeiden, dass das Lösungsmittel 2 nicht durch die Membranfiltereinrichtung 6 sondern in Richtung auf die Filtereinrichtung 7 strömt, kann in dieser Strömungsverbindung zwischen der Membranfiltereinrichtung 6 und der Filtereinrichtung 7 ebenfalls eine Einrichtung 35 zur Unterbrechung der Strömungsverbindung angeordnet sein.

Weiters ist es möglich, um nach dem Spülvorgang eventuell in einzelnen Strömungsverbindungen zwischen den Bauteilen der Vorrichtung 1 verbliebene verunreinigte Reste an Lösungsmittel 2 auszutragen, dass ein Spülausgang 36 vor der Filtereinrichtung 7 und nach der Membranfiltereinrichtung 6 angeordnet wird, wobei wiederum eine Einrichtung 35 zur Änderung der Strömungsrichtung angeordnet werden kann.

Dieser Spülvorgang erfolgt vorzugsweise nach Feststellung eines Messwertes außerhalb eines vordefinierbaren Bereiches, beispielsweise der Durchflussmenge, durch die Messeinrichtung 20. Die Zeitdauer des Spülvorganges kann dabei fix vordefiniert werden und kann dafür in der Steuereinrichtung 22 bzw., da die Messeinrichtung 20 und der Mikroprozessor mit der Messeinrichtung 20 einen gemeinsamen Bauteil bilden können, auch diese einen Zeitgeber aufweisen. So ist es möglich, dass im Mikroprozessor eine Softwareroutine hinterlegt ist, die über die Steuereinrichtung 22 die Einrichtungen 35 zur Unterbrechung bzw. Änderung des Strömungsverlaufs in der Vorrichtung 1 in die entsprechenden Betriebszustände schaltet und über eine vordefinierbare Zeitdauer in diesem Schaltzustand hält. Nach Beendigung des Spülvorganges werden die ursprünglichen Einstellung der Einrichtungen 35 zur Unterbrechung bzw. Änderung der Strömungsrichtung über die Steuereinrichtung wieder hergestellt.

Selbstverständlich ist es möglich, alternativ oder optional hierzu auch die Filtereinrichtung 7 in ähnlicher Weise mit reinem Lösungsmittel 2 zu spülen und so von Verunreinigungen zu befreien, sodass diese wieder eine größere Durchlässigkeit für das Lösungsmittel 2 und damit eine größere Reinigungsleistung aufweist.

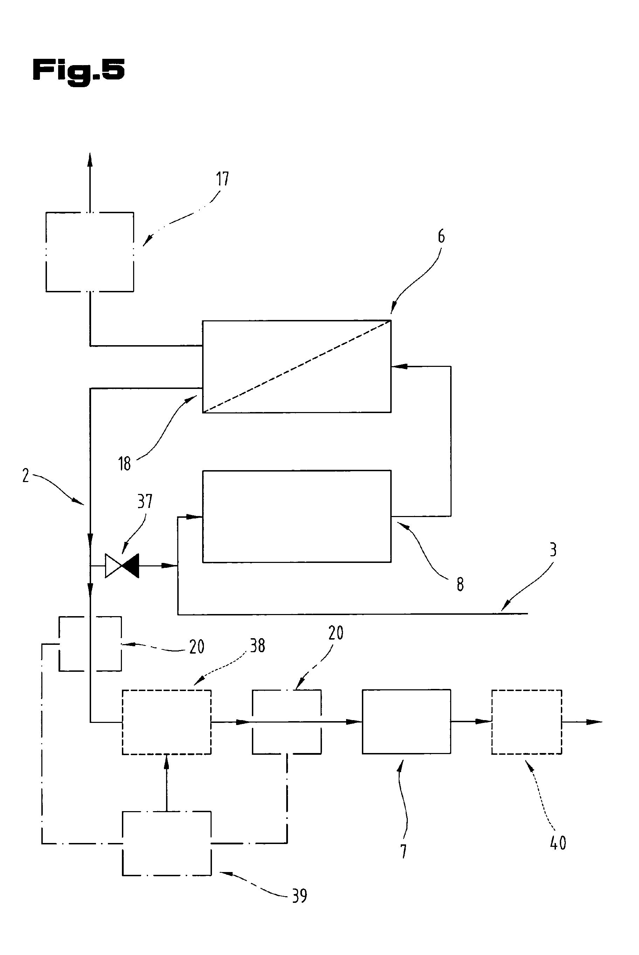

Bei der Ausführungsvariante nach Fig. 5 ist vorgesehen, dass die Lösung 3 kontinuierlich mit reinem Lösungsmittel 2 verdünnt wird, wozu eine entsprechende Strömungsverbindung vorgesehen ist, beispielsweise zwischen der Leitung, welche an den Lösungsmittelausgang 18 der Membranfiltereinrichtung 6 und der Zuleitung der Lösung zur Fördereinrichtung 8. Von Vorteil ist dabei, wenn in dieser Strömungsverbindung zwischen den beiden Leitungen eine Rückschlagsicherung 37, beispielsweise ein Rückschlagventil, angeordnet ist, um zu vermeiden, dass die Lösung 3 direkt in die an den Lösungsmittelausgang 18 der Membranfiltereinrichtung 6 angeschlossene Leitung übertritt.

Durch diese kontinuierliche Verdünnung kann eine höhere Strömungsgeschwindigkeit in der Membranfiltereinrichtung 6 erreicht werden und somit auch die Trennleistung vergrößert werden. Zudem können dazu Wartungsintervalle der Membranfiltereinrichtung 6 verlängert werden, da die Zeitdauer, in der die Membran mit den niedergeschlagenen Salzen zuwächst, verlängert werden kann.

Diese Zudosierung vom reinen Lösungsmittel 2 zur einströmenden Lösung 3 kann dabei derart ausgeführt sein, dass in Abhängigkeit von einem Messwert, z.B. einem Leitfähigkeitswert, einem TDS-Wert oder einem pH-Wert, eine Regelung der zuzudosierenden Menge an Lösungsmittel 2 erfolgt, wodurch in der eben angesprochenen Strömungsverbindung zwischen den beiden Leitungen eine entsprechende Regeleinrichtung angeordnet werden kann, die mit der Steuereinrichtung 22 leitungsverbunden sein kann.

Weiters ist in Fig. 5 eine Mineralisationseinrichtung 38 in der Strömungsverbindung zwischen der Membranfiltereinrichtung 6 und der Filtereinrichtung 7 dargestellt. Durch diese Mineralisationseinrichtung 38 kann die Qualität des erzeugten Lösungsmittels 2, beispielsweise von Trinkwasser, verbessert werden, insbesondere dessen Geschmack. Die Menge an zu zudosierenden Mineralstoffen und/oder Vitaminen richtet sich dabei nach den jeweiligen landesspezifischen Richtwerten für Trinkwasser, beispielsweise nach dem Lebensmittelcodex für Tafel- bzw. Mineralwasser. Als Mineralien können z.B. verschiedenste Chloride von Kalzium, Magnesium, Kalium, Natrium etc. eingesetzt werden, wobei diese aufgezählten Beispiele nicht limitierend zu verstehen sind. Des weiteren können unterschiedlichste, vorzugsweise wasserlösliche Vitamine, z.B. Vitamin C, Vitamine der B-Gruppe, zugesetzt werden bzw. können fettlösliche Vitamine, z.B. Vitamine der A-Gruppe, der D-Gruppe, der E-Gruppe, in dem Lösungsmittel 2 emulgiert werden.

Die Menge an Mineralstoffen und/oder Vitaminen, die dem Lösungsmittel 2 zugesetzt werden soll, kann sich dabei nach einem Messwert, der mit der Messeinrichtung 20 erfasst wird, richten. Die Messeinrichtung 20 kann beispielsweise wiederum durch ein pH-Meter, ein TDS-Meter, eine Leitfähigkeitsmesszelle sein. Um eine möglichst annähernd gleichbleibende Qualität des mit Mineralstoffen und/oder Vitaminen versetzten Lösungsmittels 2 zu ermöglichen, kann in einem eigenen Vorratsbehälter 39 eine entsprechend vorbereitete Mischung an Mineralien vorrätig gehalten werden und von dieser Mischung entsprechende Mengen der Mineralisationseinrichtung 38 zugeführt werden. Selbstverständlich kann die Mineralisationseinrichtung 38 mit dem Vorratsbehälter 39 eine Baueinheit bilden.

Weiters ist es möglich, dass in der Mineralisationseinrichtung 38 Feststoffe, d.h. Mineralstoffe, vorgelegt werden, die eine geringe Löslichkeit in Wasser aufweisen und diese Mineralstoffe vom Lösungsmittel 2 durchströmt werden und während des Durchströmens ein der Löslichkeit entsprechender Anteil an diesen Mineralstoffen vom Lösungsmittel 2 aufgenommen wird. So ist es z.B. möglich Mineralstoffe auszuwählen, von denen sich bei Raumtemperatur im Bereich zwischen 5 mg/l und 50 mg/l, vorzugsweise 10 mg/l und 35 mg/l, lösen, bzw. deren Löslichkeitsprodukt in Wasser bei 20 °C im Bereich zwischen 1.10⁻¹ bis 1.10⁻¹⁰, insbesondere 1.10⁻² bis 1.10⁻⁹, beträgt.

Einsetzbare Mineralstoffe sind z.B. Halogenide, Carbonate, Hydrogencarbonate, wie z.B. NaCl, KCl, NaF, CaCl₂, MgCl₂, Na₂CO₃,NaHCO₃.

Von Vorteil ist es weiters, wenn Minerale verwendet werden, die in Wasser nur eine geringe Löslichkeit aufweisen, da diese in der Mineralisationsvorrichtung 38 vorgelegt und von dem Wasser umströmt werden können, ohne das diese Minerale sofort zur Gänze aufgelöst werden. Beispiele hierfür sind Silikate, wie z.B. Saponit, Nontronit, Vermiculit, Biotit, Kaolinit, Talk, Klinochlor, Pennin, Halogenide, wie z.B. Kryolith, Borate, wie z.B. Kernit, Carbonate, wie z.B. Alumohydrocalcit, Calcit, Aragonit, Dolomit, Ankerit.

Sämtliche Mineralstoffe können auch in der Filtereinrichtung 7 dem Lösungsmittel 2, d.h. dem Wasser zugegeben werden

Die Messeinrichtung 20 zur Regelung der zuzudosierenden Menge an Mineralstoffen und Vitaminen kann dabei entweder in Strömungsrichtung des Lösungsmittels 2, wie dies in Fig. 5 mit Pfeilen angedeutet ist, vor bzw. nach der Mineralisationseinrichtung 38 angeordnet sein, wobei die Anordnung nach der Mineralisationseinrichtung 38 den Vorteil hat, dass festgestellte Abweichungen direkt an die Mineralisationseinrichtung 38 weitergeleitet werden und somit eine entsprechende Korrektur möglich ist. Durch die Anordnung vor der Mineralisationseinrichtung 38 wird davon ausgegangen, dass lediglich in Abhängigkeit von einem Restwert des aus der Membranfiltereinrichtung 6 austretenden Lösungsmittels 2 an Mineralstoffen ständig zumindest annähernd gleichbleibend ist und somit auch eine kontinuierlich gleichbleiben Zudosierung an diesen Mineralstoffen möglich ist.

Die Mineralisationseinrichtung kann mit der Filtereinrichtung 7 eine Baueinheit bilden bzw. in diese integriert sein, indem z.B. die Filtermasse bzw. das Filterbett, beispielsweise die Aktivkohle, mit den Mineralstoffen und/oder Vitaminen versetzt ist, sodass bei Durchströmung der Filtereinrichtung 7 gleichzeitig Mineralstoffe entsprechend ihrem Löslichkeitsverhalten im Lösungsmittel 2 in Abhängigkeit von der Temperatur und der Strömungsgeschwindigkeit aufgenommen werden. Dazu kann die Filtereinrichtung 7 - bzw. auch die Mineralisationseinrichtung 38 ― mit einer Heizeinrichtung versehen sein, um den Mineralstoffgehalt im Lösungsmittel 2 zu erhöhen.

Nach der Filtereinrichtung 7 ist in Fig. 5 eine Sterilisationseinrichtung 40 dargestellt. Diese kann z.B. durch eine UV-Bestrahlungseinrichtung gebildet sein. Andererseits ist es möglich, dass darin ein in Wasser gering lösliches Silbersalz vorrätig gehalten wird, sodass das Wasser während des Durchströmens Silberionen aufnimmt. Durch diese optional anordenbare Sterilisationseinrichtung 40 wird eine längere Haltbarkeit des Lösungsmittels 2, insbesondere des Trinkwassers, erreicht, wodurch eine Lagerung in dem Vorratsbehälter 26 (in Fig. 5 nicht dargestellt) über einen längeren Zeitraum ermöglicht wird. In Hinblick auf die Zugabe von Silbersalzen sei erwähnt, dass deren bakterizide Wirkung aus der einschlägigen Fachliteratur bestens bekannt wird, sodass an dieser Stelle nicht näher darauf eingegangen werden muss.

In Hinblick auf die Mineralisationseinrichtung 38 sei erwähnt, dass in dieser zur Homogenisierung der Mineralstoffe und/oder Vitamine im Lösungsmittel 2 ein Rührer angeordnet sein kann. Für den Fall, dass die Mineralisationseinrichtung 38 zwischen der Membranfiltereinrichtung 6 und der Filtereinrichtung 7 angeordnet ist, besteht die Möglichkeit der Homogenisierung dadurch, dass während des Durchströmens des mit den Mineralstoffen und/oder Vitaminen versetzten Lösungsmittels 2 entsprechende Verwirbelung in der Filtereinrichtung 7 und damit die Homogenisation erfolgt.

Es besteht weiters die Möglichkeit, dass in Strömungsrichtung nach der Membranfiltereinrichtung 6 eine Einrichtung zur Zugabe von CO₂ angeordnet ist, beispielsweise mit der Mineralisationseinrichtung 38 kombiniert ist. Durch die CO₂-Zugabe, welche insbesondere unter Druck erfolgt, kann mit der Vorrichtung 1 ein Trinkwasser erzeugt werden, welches geschmacklich natürlichen Mineralwässern oder Tafelwässern zumindest annähernd nahe kommt und wird damit die Verkaufbarkeit des mit der Vorrichtung 1 hergestellten Trinkwassers verbessert.

Selbstverständlich können auch bei dieser Ausführungsvariante die Messeinrichtung 20 bzw. die Mineralisationseinrichtung 38 und/oder der Vorratsbehälter 39 mit der in Fig. 5 nicht dargestellten Steuereinrichtung 22 verbunden sein, womit sich die Automatisierbarkeit weiter optimiert lässt.

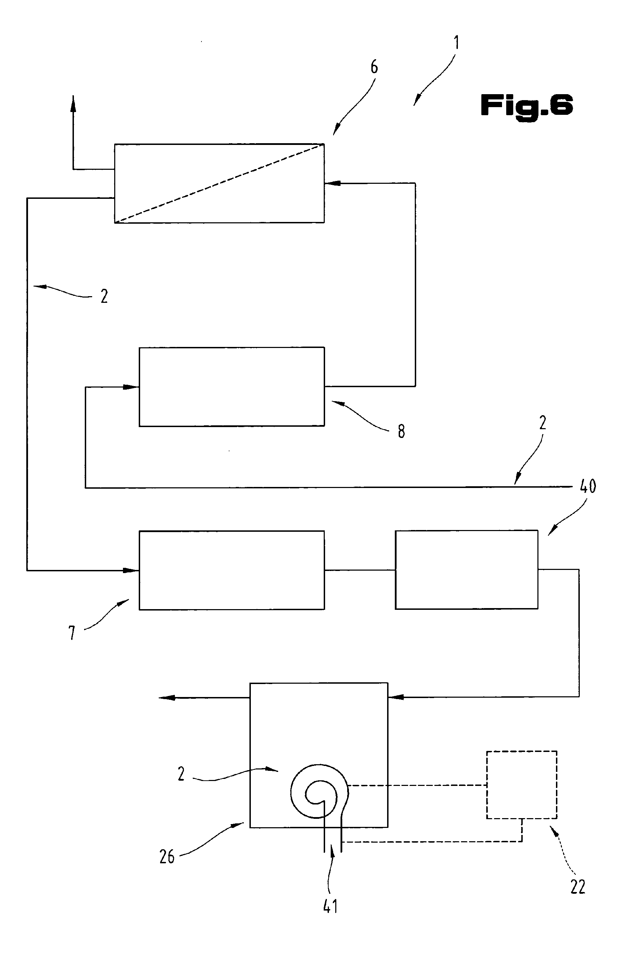

Fig. 6 zeigt schließlich eine Ausführungsvariante, bei der wiederum die Lösung 3 über die Fördereinrichtung 8 der Membranfiltereinrichtung 6 und das darin abgetrennte Lösungsmittel 2 über die Filtereinrichtung 7 sowie die Sterilisationseinrichtung 40 dem Vorratsbehälter 26 für das Lösungsmittel 2 zugeführt wird. In diesem Vorratsbehälter 26 ist nun eine Kühleinrichtung 41 angeordnet, beispielsweise ein Kühlschlange. Diese Kühleinrichtung 41 kann, wie dies strichliert in Fig. 6 angedeutet ist, mit der Steuereinrichtung 22 verbunden sein, wobei im Vorratsbehälter 26 ein weiterer Messwertgeber zur Erfassung der Temperatur des Lösungsmittels 2 im Vorratsbehälter 26 angeordnet sein kann und damit eine Kühlleistung gesteuert werden kann.

Durch die Kühlung des Lösungsmittels 2, beispielsweise des Trinkwassers, im Vorratsbehälters 26 wird die Haltbarkeit des Lösungsmittels 2 durch vermindertes Bakterienwachstum verlängert, sodass gegebenenfalls auf eine Sterilisationseinrichtung 40 verzichtet werden kann.

Die Kühleinrichtung 41 kann aber auch an einer anderen Stelle im Strömungsverlauf des Lösungsmittels 2 in der Vorrichtung 1 angeordnet sein, allerdings ist aus leicht verständlichen Gründen deren Anordnung im Vorratsbehälter 26 bevorzugt.

Des weiteren kann auch bei dieser Ausführungsvariante das Lösungsmittel 2, z.B. das Wasser, mit CO₂ versetzt werden, insbesondere im Vorratsbehälter 26, wozu dieser als Druckbehälter ausgebildet sein kann.

In der erfindungsgemäßen Vorrichtung 1 kann weiters eine Einrichtung zur physikalischen Veränderung, d.h. Energetisierung von Wasser vorgesehen sein. Diese Einrichtung kann dabei so ausgebildet sein, dass die molekulare Nahordnung der Wassermoleküle, also die Struktur des Wassers verändert wird, beispielsweise durch zumindest teilweise Aufhebung der Clusterstruktur. Von Vorteil ist dabei, dass durch ein derart belebtes Wasser, dieses für den Menschen als Lebensmittel nicht nur wertvoller wird, sondern dass damit auch dessen Haltbarkeit erhöht wird. Eine derartige Einrichtung ist im Behälter 5 nach der Membranfiltereinrichtung 6, vorzugsweise nach der Filtereinrichtung 7, strömungsverbunden mit diesen angeordnet. Erreicht kann diese physikalische Änderung des Wassers z.B. dadurch, dass in der Einrichtung ein Magnetfeld, durch welches das Wasser strömt, angelegt wird. Andererseits besteht die Möglichkeit, dass das Wasser über eine Strömungsstrecke zuerst beschleunigt und danach wieder abgebremst wird, wozu entsprechend Prallbleche und/oder Verjüngungen im Strömungskanal angeordnet sind. Gegebenenfalls kann die Strömungsrichtung des Wassers in dieser Strömungsstrecke mehrfach verändert, z.B. durch Umlenkung. Zur Beschleunigung kann die oder eine weitere Fördereinrichtung verwendet werden.

Eine erfindungsgemäße Vorrichtung 1 kann beispielsweise folgende Daten aufweisen:
Produktivität: 10 l/h bis 15 l/h
Arbeitsdruck: 60 bar bis 80 bar
Rohwasserzulauf: bis 400 l/h
Konzentratanfall: 100 l/h bis 200 l/h
Betriebstemperatur: 4 °C bis 45 °C
Gesamtsalzgehalt des Rohwassers: bis 45.000 ppm

Erreicht der Druck in der Vorrichtung 1 ein Niveau von 2,0 bis 2,5 bar, wird die Vorrichtung 1 automatisch abgeschaltet und steht in den Stand-By-Betrieb über.

Des weiteren ist es möglich, dass bei Vorhandensein eines Vorratsbehälters 26 in der Vorrichtung 1 diese den Vorratsbehälter 26 erst mit Lösungsmittel 2 bis zu einer Reserve von 8 bis 101 füllt, sodass eine ständig ausreichende Entnahmemöglichkeit an Lösungsmittel 2 über den Hahn 25 möglich ist, wozu gegebenenfalls Lösungsmittel 2 aus dem Vorratsbehälter 26 an den Hahn 25 abgegeben wird.

Der Salzgehalt des Lösungsmittels 2 nach Durchgang durch die Membranfiltereinrichtung 6 sowie gegebenenfalls die Filtereinrichtung 7, kann unter einem Niveau von 500 ppm liegen. Sollte dieser Wert überschritten werden, kann die Vorrichtung 1 dem Verwender signalisieren, dass eine Wartung der Bauteile der Vorrichtung 1 erforderlich ist.

Bei geringeren Salzgehalten, z.B. bei Verwendung der Vorrichtung 1 zur Aufbereitung von Trinkwasser aus Ortswasseranlagen, kann eine Fördereinrichtung verwendet werden, die einen geringeren Druck zeugt, beispielsweise 3 bis 6 bar.

Das erfindungsgemäße Verfahren ist selbstverständlich auch in Mittel- und Großanlagen durchführbar.

Der Ordnung halber sei abschließend darauf hingewiesen, dass zum besseren Verständnis des Aufbaus der Vorrichtung 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1, 2; 3; 4; 5; 6 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Vorrichtung
- 2: Lösungsmittel
- 3: Lösung
- 4: Konzentrat
- 5: Behälter

- 6: Membranfiltereinrichtung
- 7: Filtereinrichtung
- 8: Fördereinrichtung
- 9: Vorfilter
- 10: Deckel

- 11: Abdeckung
- 12: Seitenwand
- 13: Energieversorgungsanschluss
- 14: Stecker
- 15: Energieversorgungskabel

- 16: Konzentratausgang
- 17: Konzentratfilter
- 18: Lösungsmittelausgang
- 19: Eingang
- 20: Messeinrichtung

- 21: Anzeigeeinrichtung
- 22: Steuereinrichtung
- 23: Manometer
- 24: Leitung
- 25: Hahn

- 26: Vorratsbehälter
- 27: Sammelbehälter
- 28: Saugleitung
- 29: Einspeisebehälter
- 30: Schwimmkörper

- 31: Inhibitor
- 32: Vorratsgefäß
- 33: Regeleinrichtung
- 34: Rückschlagventil
- 35: Einrichtung

- 36: Spülausgang
- 37: Rückschlagsicherung
- 38: Mineralisationseinrichtung
- 39: Vorratsbehälter
- 40: Sterilisationseinrichtung

- 41: Kühleinrichtung

## Patentansprüche

1. Vorrichtung zur zumindest teilweisen Abtrennung eines Lösungsmittels aus einer Lösung, mit einem tragbaren Behälter in dem zumindest eine Membranfiltereinrichtung, insbesondere zumindest eine Umkehrosmose ―Einheit, sowie eine Filtereinrichtung und vorzugsweise eine Fördereinrichtung zum Aufbau eines Druckes, z.B. eine Pumpe, angeordnet sind, wobei die Membranfiltereinrichtung einen Eingang für die Lösung, einen Lösungsmittelausgang und einen Konzentratausgang für ein aus der Lösung entstandenes Konzentrat aufweist und wobei die Filtereinrichtung mit dem Lösungsmittelausgang und die vorzugsweise Fördereinrichtung mit dem Eingang strömungsverbunden ist bzw. sind, **dadurch gekennzeichnet, dass** im Behälter (5) zwischen der Membranfiltereinrichtung (6) und der Filtereinrichtung (7) und/oder in Strömungsrichtung des Lösungsmittels (2) durch ein Leitungssystem im Behälter (5) nach der Filtereinrichtung (7) zumindest eine Messeinrichtung (20) mit diesen bzw. dieser strömungsverbunden angeordnet ist, und die Messeinrichtung (20) mit einer Anzeigeund/oder Steuereinrichtung (21, 22) leitungsverbunden ist.

2. Vorrichtung nach Anspruch 1, **dadurch gekennzeichnet, dass** die Messeinrichtung (20) als Druck-, Leitfähigkeits- oder Durchflussmengenmesszelle ausgebildet ist.

3. Vorrichtung nach Anspruch 1 oder 2, **dadurch gekennzeichnet, dass** die Messeinrichtung (20) mit einem Mikroprozessor leitungsverbunden ist.

4. Vorrichtung nach Anspruch 3, **dadurch gekennzeichnet, dass** der Mikroprozessor zur Spracherkennung und/oder ―ausgabe ausgebildet ist.

5. Vorrichtung nach einem der vorhergehenden Ansprüche, **dadurch gekennzeichnet, dass** die Messeinrichtung (20) und/oder die Steuereinrichtung (22) und/oder der Mikroprozessor einen Zeitgeber aufweist.

6. Vorrichtung nach einem der vorhergehenden Ansprüche, **dadurch gekennzeichnet, dass** die Messeinrichtung (20) und/oder die Anzeige- und/oder Steuereinrichtung (21, 22) und/oder der Mikroprozessor einen Bauteil bilden.

7. Vorrichtung nach einem der vorhergehenden Ansprüche, **dadurch gekennzeichnet, dass** die Steuereinrichtung (22) mit zumindest einer Einrichtung (35) zur Unterbrechung bzw. Änderung der Strömungsrichtung der Lösung (3) bzw. des Lösungsmittels (2) im Leitungssystem des Behälters (5), z.B. einem Zwei- oder Dreiwegeventil, leitungsverbunden ist.

8. Vorrichtung nach Anspruch 7, **dadurch gekennzeichnet, dass** die Einrichtung(en) (35) zur Unterbrechung bzw. Änderung der Strömungsrichtung der Lösung (3) bzw. des Lösungsmittels (2) derart angeordnet ist bzw. sind, dass das Lösungsmittel (2) die Membranfiltereinrichtung (6) und/oder die Filtereinrichtung (7) in umgekehrter Strömungsrichtung durchströmt.

9. Vorrichtung nach einem der vorhergehenden Ansprüche, **dadurch gekennzeichnet, dass** eine Strömungsverbindung zwischen einer an den Lösungsmittelausgang (18) und einer an den Eingang (19) für die Lösung (3) der Membranfiltereinrichtung (6) angeschlossenen Leitung angeordnet ist.

10. Vorrichtung nach einem der vorhergehenden Ansprüche, **dadurch gekennzeichnet, dass** der Behälter (5) als Handkoffer ausgebildet ist.

11. Vorrichtung nach einem der vorhergehenden Ansprüche, **dadurch gekennzeichnet, dass** der Behälter (5) fahrbar ausgebildet ist.

12. Vorrichtung nach einem der vorhergehenden Ansprüche, **dadurch gekennzeichnet, dass** der Behälter (5) zumindest teilweise aus einem Metall, insbesondere Aluminium, und/oder einem, vorzugsweise durchsichtigem, Kunststoff, vorzugsweise einem Duroplast, gebildet ist.

13. Vorrichtung nach einem der vorhergehenden Ansprüche, **dadurch gekennzeichnet, dass** nach dem Konzentratausgang (16) und mit diesem strömungsverbunden ein Konzentratfilter (17) und/oder zumindest ein Ionentauscher angeordnet ist.

14. Vorrichtung nach einem der vorhergehenden Ansprüche, **dadurch gekennzeichnet, dass** in Strömungsrichtung vor der Membranfiltereinrichtung (6) bzw. vor der Fördereinrichtung (7) zumindest ein mechanischer Vorfilter (9), z.B. ein Sieb für Partikel, angeordnet ist.

15. Vorrichtung nach einem der vorhergehenden Ansprüche, **dadurch gekennzeichnet, dass** das Vorfilter (9) eine Maschenweite im Bereich von 5 mm bis 5 mesh, insbesondere 2 mm bis 10 mesh, aufweist.

16. Vorrichtung nach einem der vorhergehenden Ansprüche, **dadurch gekennzeichnet, dass** ein Vorfilter (9) mit 400 mesh und in Strömungsrichtung der Lösung (3) daran anschließend ein Vorfilter (9) mit 10 mesh angeordnet ist.

17. Vorrichtung nach einem der vorhergehenden Ansprüche, **dadurch gekennzeichnet, dass** in einer Saugleitung (28) für die Lösung (3) außerhalb des Behälters (5), die mit dem Vorfilter (9) oder der Fördereinrichtung (8) oder der Membranfiltereinrichtung (6) strömungsverbunden ist, ein Partikelfilter mit einer Maschenweite im Bereich zwischen 2 mm und 10 mm, vorzugsweise 2 mm, angeordnet ist.

18. Vorrichtung nach einem der vorhergehenden Ansprüche, **dadurch gekennzeichnet, dass** die Saugleitung (28) als schwimmende Entnahme mit einem Schwimmkörper (30) ausgebildet ist.

19. Vorrichtung nach einem der vorhergehenden Ansprüche, **dadurch gekennzeichnet, dass** im Leitungssystem des Behälters (5), vorzugsweise vor dem bzw. den Vorfilter(n) (9), eine Messzelle zur Bestimmung eines pH-Wertes der Lösung und/oder ein TDS-Meter angeordnet ist.

20. Vorrichtung nach einem der vorhergehenden Ansprüche, **dadurch gekennzeichnet, dass** im Strömungsverlauf der Lösung (3) vor der Membranfiltereinrichtung (6) eine Einrichtung zur Zugabe eines Inhibitors (31) angeordnet ist.

21. Vorrichtung nach Anspruch 20, **dadurch gekennzeichnet, dass** die Einrichtung zur Zugabe des Inhibitors (31) mit dem Vorfilter (9) kombiniert ist.

22. Vorrichtung nach einem der vorhergehenden Ansprüche, **dadurch gekennzeichnet, dass** die Filtereinrichtung (7) als Kohlefilter, der mit Marmor oder Dolomit versetzt ist, ausgebildet ist.

23. Vorrichtung nach einem der vorhergehenden Ansprüche, **dadurch gekennzeichnet, dass** nach der Membranfiltereinrichtung (6), insbesondere nach der Filtereinrichtung (7), eine Sterilisationseinrichtung (40), z.B. ein UV-Sterilisator, ausgebildet ist.

24. Vorrichtung nach einem der vorhergehenden Ansprüche, **dadurch gekennzeichnet, dass** nach der Membranfiltereinrichtung (6), insbesondere nach der Filtereinrichtung (7), eine Kühleinrichtung (41) angeordnet ist.

25. Vorrichtung nach Anspruch 24, **dadurch gekennzeichnet, dass** die Kühleinrichtung (41) in einem Tank für das Lösungsmittel (2) angeordnet ist.

26. Vorrichtung nach einem der vorhergehenden Ansprüche, **dadurch gekennzeichnet, dass** nach der Membranfiltereinrichtung (6) oder nach der Filtereinrichtung (7) eine Einrichtung zur Zugabe von Mineralstoffen und/oder Vitaminen angeordnet ist.

27. Vorrichtung nach Anspruch 26, **dadurch gekennzeichnet, dass** in der Einrichtung zur Zugabe von Mineralstoffen und/oder Vitaminen ein Rührer angeordnet ist.

28. Vorrichtung nach einem der vorhergehenden Ansprüche, **dadurch gekennzeichnet, dass** nach der Membranfiltereinrichtung (6), insbesondere nach der Filtereinrichtung (7), eine Einrichtung zur Zugabe von CO₂ angeordnet ist, insbesondere mit der Einrichtung zur Zugabe von Mineralstoffen und/oder Vitaminen kombiniert ist.

29. Vorrichtung nach einem der vorhergehenden Ansprüche, **dadurch gekennzeichnet, dass** Leitungen und Anschlüsse für die Lösung (3), das Lösungsmittel (2) und das Konzentrat (4) im bzw. am Behälter (5) unterschiedlich markiert sind, insbesondere unterschiedliche Farben aufweisen.

30. Vorrichtung nach einem der vorhergehenden Ansprüche, **dadurch gekennzeichnet, dass** zumindest eine Solarzelle zur Stromgewinnung angeordnet, z.B. ein Behälterteil durch diese gebildet ist.

31. Vorrichtung nach einem der vorhergehenden Ansprüche, **dadurch gekennzeichnet, dass** nach der Membranfiltereinrichtung (6) ein pH-Meter angeordnet ist.

32. Vorrichtung nach einem der vorhergehenden Ansprüche, **dadurch gekennzeichnet, dass** Anschlüsse für einen Lösungszulauf, einen Lösungsmittelablauf einen Konzentratablauf an einer äußeren Oberfläche des Behälters (5) angeordnet sind.

33. Verfahren zur zumindest teilweisen Abtrennung eines Lösungsmittels aus einer Lösung, bei dem das Lösungsmittel gegebenenfalls nach einer Vorfiltrierung der Lösung durch Permeation, durch eine semipermeable Membran der Lösung entzogen und einer anschließenden Endreinigung unterzogen wird, insbesondere mit einer Vorrichtung nach einem der vorhergehenden Ansprüche, **dadurch gekennzeichnet, dass** eine Permeationsgeschwindigkeit überwacht und das Verfahren bei einer Abnahme der Permeationsgeschwindigkeit unterbrochen oder die Membran mit reinem Lösungsmittel gespült wird.

34. Verwendung der Vorrichtung nach einem der Ansprüche 1 bis 32 zur Trinkwassererzeugung, insbesondere aus Wasser mit hohem Gehalt an gelösten Salzen, wie z.B. aus Meerwasser.
